# EUROPÄISCHE PATENTANMELDUNG

(11) **EP 0 980 771 A2**
(43) Veröffentlichungstag der Anmeldung: **23.02.2000**
(21) Anmeldenummer: 99113683.9
(22) Anmeldetag: 15.07.1999
(51) Int. Cl.: B60C 17/06, B60C 15/02

(54) **Fahrzeugrad mit - insbesondere einteiliger - Felge und schlauchlosem Luftreifen, das für Notlauf geeignet ist und ein Verfahren zur Montage eines Fahrzeugsrades, mit Notlaufstützfläche**

(30) Priorität: 20.08.1998 DE 19837740
(71) Anmelder: Continental Aktiengesellschaft, 30165 Hannover (DE)
(72) Erfinder: Glinz, Michael, 31535 Neustadt (DE); Walloch, Frank, Dr., 31228 Peine (DE); Knopp, Roland, 30974 Wennigsen (DE); Hellweg, Hans-Bernd, Dr., 30926 Seelze (DE)

(57) **Zusammenfassung**

Fahrzeugrad mit - insbesondere einteiliger - Felge und schlauchlosem Luftreifen, der einen Laufstreifen, eine Karkasse und zwei Seitenwände aufweist und der an den radial inneren Endbereichen der Seitenwände an der Felge befestigt ist,
- wobei innerhalb des Luftreifens ein sich auf der Felge abstützender Notlaufstutzkörper angeordnet ist, der eine den Reifen im Schadensfall abstützende Notlauffläche aufweist und
- wobei an wenigstens einer Seitenwand des Luftreifens ein Wulst zur Befestigung des Luftreifens an der Felge ausgebildet ist, wobei wenigstens einer der beiden Wülste in seiner Umfangslänge - insbesondere elastisch - veränderbar ist.

## Beschreibung

Die Erfindung betrifft ein Fahrzeugrad mit - insbesondere einteiliger - Felge und schlauchlosem Luftreifen, das für Notlauf geeignet ist sowie ein Verfahren zur Montage eines Fahrzeugrades mit Notlaufstützfläche.

Schlauchlose Fahrzeugluftreifen moderner Bauart sind üblicherweise an den radial inneren Enden ihrer Seitenwände zu Wülsten ausgebildet. Von Reifenwulst zu Reifenwulst erstreckt sich eine aus mit Gummi beschichteten Festigkeitsträgern ausgebildete Karkasse radialer Bauart. In jedem Reifenwulst ist ein ringförmiger, konzentrisch zur Reifenachse angeordneter zugfester, steifer Wulstkern aus Stahl ausgebildet, in dem die Karkasse verankert ist. Der Fahrzeugluftreifen wird bei der Montage des Fahrzeugluftreifens auf der Felge mit seinem Wulst auf der radial äußeren Mantelfläche der Felge befestigt. Die hohe Zugfestigkeit und Steifigkeit des Wulstes, die durch die Zugfestigkeit und Steifigkeit des Wulstkerns bewirkt wird, sichert die beim schlauchlosen Reifen gewünschte Abdichtung in der Felgen-Reifenverbindung und sichert den dichten Sitz des Reifens auf der Felge im aufgepumpten Zustand des Reifens. Die zugsteife, zugfeste Ausbildung des Wulstkerns verhindert auch bei anspruchsvollen Fahrlanövern ein axiales Abrutschen des Fahrzeugrades von der Felge über das nach radial außen gerichtete Felgenhorn.

Zur Montage bzw Demontage des Fahrzeugluftreifens muß der zugfeste, zugsteife Wulst bei einer einteiligen Felge mit seinem Innendurchmesser über den gegenüber dem Innendurchmesser des steifen Wulstes größeren Außendurchmesser des Felgenhorns bewegt werden. Um dies zu ermöglichen ist zusätzlicher Aufwand, z.B. die Ausbildung der Felge mit einem Tiefbett, erforderlich.

Im Falle des Luftdruckverlustes knickt die Reifenseitenwand ein. Dabei kann sie auf das zur axialen Sicherung des Fahrzeugluftreifens auf der Felge ausgebildete Felgenhorn gepreßt werden. Bei Weiterfahrt des Fahrzeugs kann die Reifenseitenwand und das Felgenhorn zerstört werden. Der Fahrzeugluftreifen kann von der Felge springen.

Um dies zu verhindern und um ein sicheres Weiterfahren trotz Druckluftverlust zu ermöglichen, wurde vorgeschlagen auf der radialen Außenseite der einteiligen Felge die Felge mit zusätzlichen über das Felgenhorn radial hinausragenden Notlaufstützflächen auszubilden, auf denen sich der Fahrzeugluftreifen mit seiner radialen Innenseite seines Laufflächenbereichs bei Druckluftverlust abstützt und somit Notlaufeigenschaften nach Druckluftverlust gewährleistet. Die Montage und Demontage der Fahrzeugluftreifen auf derartige Felgen erweist sich als schwierig, da die zugfesten, steifen Wülste sogar über die noch größeren Außendurchmesser der Notlaufstützflächen bewegt werden müssen und die Notlaufstützflächen den zwischen den Wulstsitzflächen auf den Felgen zum Einsatz von Montagehilfen, z. B. für die Ausbildung eines Tiefbetts, zur Verfügung stehenden axialen Raum zusätzlich beschränken. Um den steifen, zugfesten Wulst überhaupt montieren zu können ist das ausführbare Verhältnis zwischen dem Außendurchmesser der Notlaufstützfläche zu dem Innendurchmesser des zugfesten, steifen Wulstes sehr begrenzt. Der Außendurchmesser der Notlaufstützfläche darf nur so groß gewählt werden, daß der steife Wulst noch darüber bewegt werden kann. Hierdurch werden die Notlaufstützflächen zu einem großen Teil vom vergleichsweise kleinen Innendurchmesser des steifen Wulstes und somit von einem für die Notlaufeigenschaften unerheblichen Parameter bestimmt. Über für optimale Notlaufeigenschaften abgestimmte größere Außendurchmesser der Notlaufstützflächen der Felgen lassen sich die Fahrzeugluftreifen nicht mehr montieren.

Von CTS-Reifen ist es bekannt, schlauchlose Fahrzeugluftreifen mit ihren Wülsten auf Stützflächen an der radial inneren Seite der mit an der radial äußeren Seite mit Notlaufstützflächen ausgebildeten, einteiligen CTS-Felge abzustützen. In jedem Reifenwulst ist ein ringförmiger, konzentrisch zur Reifenachse angeordneter zugfester, drucksteifer Wulstkern aus Stahl ausgebildet, in dem die Karkasse verankert ist. Der CTS-Fahrzeugluftreifen wird bei der Montage des Fahrzeugluftreifens auf der Felge mit seinem Wulst auf der radial inneren Mantelfläche der Felge befestigt. Die hohe Zugfestigkeit und Drucksteifigkeit des Wulstes, die durch die Zugfestigkeit und Drucksteifigkeit des Wulstkerns bewirkt wird, sichert die beim schlauchlosen Reifen gewünschte Abdichtung in der Felgen-Reifenverbindung und sichert den dichten Sitz des Reifens auf der Felge im aufgepumpten Zustand des Reifens. Die drucksteife, zugfeste Ausbildung des Wulstkerns verhindert auch bei anspruchsvollen Fahrmanövern ein axiales Abrutschen des Fahrzeugrades von der Felge über das auf der radial inneren Seite der Felge nach radial innen gerichtete Felgenhorn. Ein solcher Reifen ist beispielsweise aus der DE-30 00 428 C2 bekannt.

Da sowohl der Felgensitz als auch das Felgenhorn auf der radial inneren Seite der Felge ausgebildet sind, steht bei einem CTS-Reifen ein größerer axialer Erstreckungsbereich zur Ausbildung von Notlaufstützflächen auf der radial äußeren Mantelfläche der Felge zur Verfügung als bei dem an der radial äußeren Mantelfläche einer Felge herkömmlich befestigten Reifen-Rad-System. Das Felgenhorn stellt auf der radial äußeren Seite der CTS-Felge keinen den Notlauf störendes Felgenelement mehr dar.

Zur Montage bzw Demontage des CTS-Fahrzeugluftreifens muß der zugfeste, drucksteife Wulst mit seinem Innendurchmesser auf der radial äußeren Mantelfläche der Felge über den gegenüber dem Innendurchmesser des steifen Wulstes größeren Außendurchmesser der Notlaufstützflächen und auf der radial inneren Mantelfläche der Felge über den gegenüber dem Innendurchmesser des steifen Wulstes kleineren Innendurchmesser bewegt werden. Um dies zu ermöglichen, ist zusätzlicher Aufwand, zB die Ausbildung der Felge mit einem Hochbett auf der radial inneren Mantelfläche sowie aufwendige spezielle Montagetechniken, erforderlich.

Die Montage und Demontage der Fahrzeugluftreifen auf derartige Felgen erweist sich somit ebenso als schwierig, da auch die zugfesten, drucksteifen CTS-Wülste über die noch größeren Außendurchmesser der Notlaufstützflächen auf der radialen Außenseite der Felge und über den gegenüber dem Innendurchmesser des steifen Wulstes kleineren Innendurchmesser auf der radial inneren Mantelfläche der Felge bewegt werden müssen. Um den drucksteifen, zugfesten Wulst überhaupt montieren zu können, ist auch beim CTS-Reifen das ausführbare Verhältnis zwischen dem Außendurchmesser der Notlaufstützfläche zu dem Innendurchmesser des zugfesten, drucksteifen Wulstes noch sehr begrenzt. Der Außendurchmesser der Notlaufstützfläche darf nur so groß gewählt werden, daß der steife Wulst noch darüber bewegt werden kann. Hierdurch werden die Notlaufstützflächen auch beim CTS-Reifen noch zu einem großen Teil vom vergleichsweise kleinen Durchmesser des steifen Wulstkerns und somit von einem für die Notlaufeigenschaften unerheblichen Parameter bestimmt. Über für optimale Notlaufeigenschaften abgestimmte größere Außendurchmesser der Notlaufstützflächen der Felgen lassen sich die Fahrzeugluftreifen mit ihren steifen Wülsten nicht mehr montieren.

Die Felgen sind Spezialfelgen, bei denen die Notlaufstützfläche bereits Teil der Felgen sind. Ein Verändern der Notlaufeignung entsprechend geänderter Anforderungen ist nur sehr eingeschränkt und mit großem Aufwand geringfügig möglich.

Aus der DE-OS 35 07 046 ist ein Fahrzeugrad mit einem auf einer Radfelge befestigten Luftreifen, der im wesentlichen einen Laufstreifen, zwei Seitenwände, eine Karkasse, Verstärkungselemente sowie zwei mit Wulstkernen versehene Reifenwülste aufweist, bekannt, wobei innerhalb des Luftreifens ein sich auf der Felge abstützender Notlaufstützkörper angeordnet ist, der eine den Reifen im Schadensfall abstützende Notlauffläche aufweist. Die Montage des Reifens mit steifen Wülsten beschränkt auch hier die Ausbildung des Außendurchmessers der Notlaufstützfläche. Ein Wechsel oder eine Anpassung der Notlaufstützfläche ist auch hier ohne Verzicht auf einen sicheren Sitz des Reifens auf der Felge nur sehr aufwendig und eingeschränkt möglich.

Der Erfindung liegt die Aufgabe zugrunde ein Fahrzeugrad und ein Verfahren zur Montage eines Fahrzeugrades zu schaffen, bei dem in einfacher Weise den individuellen Erfordernissen für den Notlauf entsprechend Notlaufeigenschaften optimiert werden können.

Die Aufgabe wird erfindungsgemäß durch die Ausbildung eines Fahrzeugrades gemäß den Merkmalen des Anspruchs 1 sowie durch das Verfahren gemäß den Merkmalen von Anspruch 39 gelöst.

Der Notlaufstützkörper kann mit einer der für das Fahrzeugrad individuell gewünschten Notlaufeignung entsprechenden Notlaufstützfläche ausgebildet werden und wird auf der Felge in Notlaufposition angeordnet. Der Fahrzeugreifen wird nach aus einem ersten Umfangszustand - insbesondere durch elastische Dehnung - in einen zweiten Umfangszustand durchgeführter Umfangsveränderung des Wulstbereich mit diesem veränderten Wulstbereich einfach über die Felge und den darauf angeordneten Notlaufstützkörper bewegt, sodaß sich die beiden Reifenwülste beidseitig des Notlaufstützkörpers befinden. Der Wulstbereich mit verändertem Umfangszustand wird aus seinem zweiten wieder in den ersten Umfangszustand - insbesondere aufgrund elastischer Rückstellkkräfte - verändert. Der Reifen kann mit seinen Wülsten an der Felge befestigt werden. Zur Veränderung der Notlaufeignung kann kann der Reifen in einfacher Weise nach Umfangsveränderung des Wulstes in den Zustand über den Notlaufstützkörper von der Felge entfernt und der Notlaufstützkörper gegen einen den neuen Erfordernissen entsprechenden Notlaufstützkörper ausgetauscht werden. Danach wird der Reifen mit seinem veränderbaren Wulst , wie dargelegt, wieder über die mit dem neuen Notlaufstützkörper bestückte Felge und den neuen Notlaufstüzkörper bewegt und mit seinen Wülsten auf der Felge befestigt. Auf diese Weise ist auch in einfacher Weise eine Umrüstung eines Fahrzeugrades ohne Notlaufeignung auf eine optimierte Notlaufeignung möglich.

Die Ausbildung gemäß den Merkmalen des Anspruchs 2 ermöglicht darüberhinaus, daß die radial äußere Oberfläche der Felge ungestört von Anforderungen für die Befestigung des Reifens an der Felge vollständig für die Anordnung und Montage des Notlaufstützkörpers auf der Felge genutzt, so daß deren Optimierung noch besser den Notlauferfordernissen entsprechend erfolgen kann.

Besonders vorteilhaft ist die Ausbildung gemäß den Merkmalen von Anspruch 3. Der in seiner Umfangslänge - insbesondere elastisch - veränderbare Wulstkern ermöglicht die Montage des Wulstes durch Bewegung über die Notlaufstützfläche mit einem größeren Wulstkerndurchmesser als im befestigten Betriebszustand des Wulstes und zur Bewegung über das Felgenhorn mit einem kleineren Wulstkerndurchmesser als im befestigten Betriebszustand, sodaß die Ausbildung der Notlaufstützflächen nicht mehr in Abhängigkeit vom Durchmesser des Wulstkerns im Betriebszustand und vom inneren Felgenhorndurchmesser, sondern in erster Linie optimalen Notlaufeigenschaften entsprechend ausgebildet werden kann. Nach Einführen des Wulstes in die Ringkammer wird der Füllring radial innerhalb des Wulstes axial in die Ringkammer eingeführt,sodaß zwischen radial innerer Ringkammerwand und Füllring, zwischen Füllring und Wulst und zwischen Wulst und radial äußerer Ringkammerwand radialer Formschluß und zwischen axial innerer Ringkammerwand und Wulst und zwischen Wulst und dem die axial äußere Ringkammerwand bildenden Felgenhorn jeweils axialer Formschluß hergestellt wird. Während des Fahrzeugradbetriebes besteht sowohl im Normal- als auch im Notlaufbetrieb nach Druckluftverlust ein vollständiger Formschluß nach axial außen und innen und nach radial außen und innen zwischen einstückiger Ringkammer der Felge und Wulst. Sowohl die axialen als auch die radial auf den Wulst wirkenden Kräfte werden somit unmittelbar in die im Befestigungsbereich einstückige Felge eingeleitet. In das einzige zusätzliche Element, den Füllring, werden auch im Notlaufbetrieb keine wesentlichen axialen Kräfte eingeleitet. Auf diese Weise kann der Wulst sogar im Notlaufbetrieb sicher und zuverlässig seine Position in der Ringkammer beibehalten. Der in seiner Umfangslänge veränderbare Wulst kann somit in einfacher und funktionssicherer Weise sowohl montiert als auch demontiert werden wobei sowohl die Notlaufstüzflächen für den Notlauf optimiert als auch das Felgenhorn hinsichtlich der axialen Stütze für den Wulst und der Wulstkern in seinem Betriebszustand hinsichtlich seiner Eigenschaften im Betriebszustand optimiert werden können. Besonders sicher ist die Krafteinleitung in die Felge, wenn der Wulst über seine ganze axiale Erstreckung nach radial innen vollständig auf dem Füllring aufliegt. Wenn der Wulst und der Füllring die Ringkammer vollständig ausfüllen, wird ein besonders zuverlässiger Formschluss zwischen Wulst und Felge erzielt. Durch Ausbildung des Fahrzeugluftreifens mit elastisch veränderbarer Umfangslänge des Wulstes ist besonders einfach und sicher eine Umfangslängenveränderung von einer ersten Umfangslänge zu individuell entsprechend den jeweiligen Erfordernissen geänderten weiteren Umfangslängen entgegen der Wirkung rückstellender Kräfte und wieder zurück in die erste Umfangslänge unter Ausnützung der rückstellenden Kräfte erzielbar.

Bevorzugt ist die Ausbildung gemäß den Merkmalen von Anspruch 4 zur Erzielung besonders guter Notlaufeigenschaften, da der Laufstreifen trotz optimaler Abstandsbreite der zwischen den Reifenwülsten des Fahrzeugluftreifens gerade in den besonders kritischen Schulterbereichen ausreichend gestützt werden kann. Besonders vorteilhaft ist es, zur Stützung der im Notlauf besonders kritischen Schulterbereiche auf den axialen Seitenbereichen der radial äußeren Mantelfläche der Felge jeweils eine Notlaufstützfläche auszubilden.

Besonders vorteilhaft ist eine Ausbildung des Fahrzeugrades, bei dem der Wulstkern ein im Wulst integriert ausgebildeter Gummikern ist. Der Gummikern ist einfach herzustellen und kann besonders einfach und zuverlässig im Wulst verankert werden. Der Wulst kann hierdurch in einfacher, zuverlässiger Weise in seiner Umfangslänge elastisch dehnbar ausgebildet werden. Für einen besonders sicheren Sitz ist der Gummikern mit einer Shore -A- Härte aus dem Bereich von 80 bis 100 - bevorzugt aus dem Bereich zwischen 85 bis 90 - ausgebildet.

In einer anderen Ausbildungsform des Fahrzeugrades ist der Wulst vollständig kernlos ausgebildet. Der Wulst ist besonders einfach ohne zusätzlichen Aufwand für einen Kern herzustellen, ist durch sein kernloses Gummimaterial in seiner Umfangslänge ausreichend elastisch dehnbar auszubilden und kann dennoch sicher und zuverlässig durch den Formschluß in der Ringkammer verankert werden.

Die Ausbildung gemäß den Merkmalen des Anspruchs 8 ermöglicht eine besonders einfache und zuverlässige Montage und Demontage des Fahrzeugluftreifens auf der Felge. Nachdem der Wulst in seine Befestigungsposition in der Ringkammer eingeführt worden ist, wird er durch einfaches axiales Verschieben des Füllrings auf der hierzu ausgebildeten Lagerfläche der Ringkammer in seine Füllposition in der Ringkammer geschoben, wodurch der vollständige Formschluß des Wulstes in der Ringkammer hergestellt und gesichert wird. Durch einfaches axiales Herausziehen des Füllrings aus seiner Füllposition wird der Formschluß aufgehoben, so daß der Wulst aus der Ringkammer entfernt und der Fahrzeugluftreifen von der Felge demontiert werden kann.

Durch die Ausbildung eines Fahrzeugrads, bei dem sich der Füllring in seiner Befestigungsposition in der Ringkammer axial durch die Öffnung nach außen erstreckt, kann zusätzlich radialer Formschluß zwischen unmittelbar an den Wulst anschließendem Seitenwandbereich und Felgenhorn und zwischen unmittelbar an den Wulst anschließendem Seitenwandbereich und Füllring und somit zur Felge zumindest im Duchdringungsbereich durch die Öffnung erzielt werden. Die Verankerung des Wulstes in der Felge wird hierdurch noch sicherer. Darüberhinaus wird der Zugang zum Füllring von außen hierdurch erleichtert, sodaß Montage und Demontage vereinfacht werden.

Durch die konisch erweiterte Ausbildung der radial äußeren Mantelfläche des Füllrings in seiner Erstreckung außerhalb der Ringkammer wird die Reifenseitenwand im Felgenhornbereich zusätzlich sichergestellt, daß der Verlauf der unteren Reifenseitenwand im axial außen an das Felgenhorn anschließenden Bereich mit einer nach radial außen gerichteten Richtungskomponente behaftet. Auf diese Weise wird zusätzlich der Formschluß zwischen Reifenwulst und Felge gesichert. Besonders vorteilhaft ist es, wenn der Füllring die Reifenseitenwand im unmittelbaren Anschlußbereich an das Felgenhorn zusätzlich Steifigkeit verleiht. Um dies zu erreichen, ist es vorteilhaft im unmittelbaren Anschluß an das Felgenhorn axial außerhalb des Felgenhorn, die radial äußere Kontur des Füllrings mit einer zur Reifenseitenwandkontur in diesem Bereich korrespondierenden Krümmungsverlauf auszubilden. Bevorzugt ist das Fahrzeugrad derart ausgebildet, daß die axial äußere Stirnfläche als eine axiale Auflagefläche zur axialen Stütze der unteren Reifenseitenwand ausgebildet ist. Auf diese Weise ist der Reifen bei Kurvenfahrten im unteren Seitenwandbereich zur Erzielung guter Handlingeigenschaften axial gestützt und kann bei besonderen Stoßbelastungen unter Aufhebung der axialen Stützwirkung bis in den unteren Seitenwandbereich zur Erzielung guter Komforteigenschaften einfedern.

Besonders sicher ist die Befestigung eines Reifens, bei dem der Füllring mit seiner radial äußeren Mantelfläche in seiner Erstreckung außerhalb der Ringkammer der Kontur der Folge folgend ausgebildet ist, wobei der Luftreifen im Innern durch die Felge und außen durch den Füllring gestützt ist.

Besonders vorteilhaft, weil einfach herzustellen, zu montieren und zu demontieren ist die Ausbildung gemäß den Merkmalen von Anspruch 9. Durch die zylindrische Ausbildung der radial äußeren Mantelfläche des Füllrings wird darüberhinaus zusätzlich besonders zuverlässig ein Einleiten axialer Kräfte vom Wulst in den Füllring verhindert, sodaß die Verankerung des Wulstes noch zuverlässiger wird.

Durch die Ausbildung eines Fahrzeugrades, bei dem der größte Außendurchmesser der Notlaufstützflächen um einen Faktor zwischen 1,05 und 1,3 größer als der Innenringdurchmesser des Wulstkerns im montierten Zustand des Fahrzeugrades beträgt, ermöglicht optimale Notlaufeigenschaften durch besonders großen Außendurchmesser der Notlaufstützflächen bei Beibehaltung der zur Erzielung guter Einfederung des Reifens und somit guter Komforteigenschaften optimaler kleiner Innenringdurchmesser des Wulstkerns. Die Ausbildung eines Fahrzeugrades, bei dem der größte Außendurchmesser der Notlaufstützflächen um einen Faktor zwischen 1,1 und 1,2 größer als der Innenringdurchmesser des Wulstkerns im montierten Zustand des Fahrzeugrades beträgt, stellt einen opimale Ausbildungsbereich der Standardreifendimensionen zur Lösung der Zielkonflikte zwischen gute Notlaufeigenschften einerseits und Komfort und Gewicht des Fahrzeugrades andererseits dar.

Die Ausbildung eines Fahrzeugrades, bei dem der Wulstkern eine Dehnbarkeit und/oder Stauchbarkeit von 5 bis 30 % aufweist, ermöglicht eine einfache und zuverlässige Montage trotz optimaler Notlaufeigenschaften durch Ausbildung besonders großer Außendurchmesser der Notlaufstützflächen trotz Beibehaltung der Ausbildung der Erzielung guter Einfederung des Reifens und somit guter Komforteigenschaften durch optimal kleine Innenringdurchmesser des Wulstkerns. Durch einfaches - insbesondere elastisches - Dehnen und/oder Stauchen des Wulstes wird der Wulst jeweils auf den zur Montage bzw zur Demontage über die Notlaufstützflächen erforderlichen optimalen Durchmesser, auf den zur Montage bzw zur Demontage über das nach innen gerichtete Felgenhorn erforderlichen optimalen Durchmesser und auf den zum sicheren Sitz in der Ringkammer erforderlichen optimalen Durchmesser eingestellt. Die Ausbildung eines Fahrzeugrades, bei dem der Wulstkern eine Dehnbarkeit und/oder Stauchbarkeit von 10 bis 20 % ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.

Bevorzugt ist die Ausbildung gemäß den Merkmalen von Anspruch 12, wonach der Wulstkern eine Dehnbarkeit von 5 bis 30 % und eine Stauchbarkeit von 1 bis 5% aufweist und wonach der Wulstkern insbesondere im montierten Zustand des Fahrzeugrades ungedehnt und ungestaucht ist. Durch einfaches - insbesondere elastisches - Dehnen aus dem ungedehnten und ungestauchten Zustand wird der Wulstkern auf einen zur Montage bzw Demontage über die Notlaufstützfläche optimal großen Durchmesser gebracht. Durch einfaches - insbesondere elastisches - Stauchen aus dem ungedehnten und ungestauchten Zustand wird der Wulstkern auf einen zur Montage bzw Demontage über das nach innen gerichtete Felgenhorn optimal kleinen Durchmesser gebracht. Die Ausbildung eines Fahrzeugrades, bei dem der Wulstkern eine Dehnbarkeit 10 bis 20 % und eine Stauchbarkeit von 2,5 bis 3,5 % aufweist, ermöglicht eine einfache und zuverlässige Montage bei opimalem Ausbildungsbereich der Standardreifendimensionen zur Lösung der Zielkonflikte zwischen guten Notlaufeigenschaften einerseits und Komfort und Gewicht des Fahrzeugrades andererseits.Besonders vorteilhaft ist es, wenn der Wulstkern im montierten Zustand des Fahrzeugrades ungedehnt und ungestaucht ist und somit in Umfangsrichtung weitgehend frei von in Umfangsrichtung wirkenden inneren Kräften ist. Besonders vorteilhaft ist hierbei die elastische dehnbare und elastisch stauchbare Ausbildung. Der Wulstkern wird aus dem ungedehnten und ungestauchten Zustand zur Montage über die Notlaufstützflächen den elastischen Rückstellkräften entgegenwirkend in Umfangsrichtung gedehnt. Nach der Montage über die Notlaufstützflächen wird er duch die Rückstellkräfte wieder in seiner Umfangslänge bis in den ungedehnten und ungestauchten Zustand verkleinert. Zur Montage über das radial nach innen gerichtete Felgenhorn wird der Wulstkern aus dem ungedehnten und ungestauchten Zustand den elastischen Rückstellkräften entgegenwirkend in Umfangsrichtung gestaucht. Nach der Montage über das Felgenhorn wird er in der Ringkammer duch die Rückstellkräfte wieder in seiner Umfangslänge bis in den ungedehnten und ungestauchten Zustand vergrößert. In entsprechenderweise erfolgt die Demontage.

Die Ausbildung gemäß den Merkmalen von Anspruch 14 ermöglicht eine besonders zuverlässige, einfach handhabbare Ausbildung eines Füllrings. Die im wesentlichen in Umfangsrichtung gerichteten gummierten Festigkeitsträger - multifilamentartig oder monofilamentartig - aus Stahl oder textiler Bauart gewährleisten eine sichere, zuverlässige Beibehaltung des Sitzes des Füllrings auf der Lagerfläche in der Ringkammer und ausreichend Elastizität zur axialen Montage und Demontage. Besonders einfach herzustellen ist die Ausbildung des Füllrings aus einem um die Achse des Füllrings wendelförmig gespulten, kontinuierlichen Festigkeitsträgers.

Die Ausbildung gemäß den Merkmalen des Anspruchs 15 mit innerhalb der Reifenkavität eingebrachtem Gleitmittel zur Vermeidung der Reibung zwischen im Notlauf relativ zueinander bewegten Teilen erhöht die Dauerhaltbarkeit des Fahrzeugrades auch im Notlauf.

Bevorzugt ist die Ausbildung gemäß den Merkmalen von Anspruch 16. Dabei besteht das Gleitmittel als Suspension aus einer mit einem Anteil von Festkörpern versehenen Flüssigkeit, wobei die Festkörper eine sphärische Oberfläche aufweisen und als Rollkörper zum Aufbau einer Rollreibung zwischen den relativ zueinander bewegten Teilen ausgebildet sind. Durch eine solche Ausbildung der Festkörper lässt sich ein Übergang aus dem bisher bei allen Lösungen vorherrschenden Gleitreibungsbereich in den Rollreibungsbereich erreichen, wobei die Festkörper selbst als Rollkörper dienen. Bei einer Reibpaarung von relativ zueinander bewegten und etwa in ihrer Härte gleich eingestellten Teilen ergibt sich dabei ein durch die Suspension begünstigtes Abrollen unter lediglich leichtem Eindringen der Rollkörper in die Reibpartner, während sich zwischen relativ zueinander bewegten und unterschiedlich harten Teilen die Rollkörper in den weicheren Reibpartner teilweise eindrücken und eine durch die Flüssigkeit in der Suspension unterstützte stationäre Drehbewegung ausführen können. Eine vorteilhafte Ausbildung besteht darin, dass die Rollkörper eine größere Härte und Abriebfestigkeit als das Reifenmaterial aufweisen. Somit wird ebenfalls zumindest im Hinblick auf einen - härteren - Reibpartner eine Rollreibung ermöglicht und eine direkte Berührung zwischen den Reibpartnern vermieden.

Geeignete Rollkörper zum Aufbau einer Rollreibung zwischen den relativ zueinander bewegten Teilen sind solche, die eine sphärisch ausgebildete, vorzugsweise kugelförmige Oberflächenform aufweisen. Mit solchen Rollkörpern ist ausgehend von einer Ruhelage oder bei im Betriebszustand entstehenden Verschiebungen der Anhäufungen von Rollkörpern eine Rollfähigkeit sofort und in jede Richtung erreichbar.

Im Hinblick auf eine reproduzierbare Herstellung von z.B. gleich großen Rollkörpern ist es vorteilhaft, dass die Rollkörper zum Aufbau einer Rollreibung tonnenförmig oder zylindrisch ausgebildet sind. Hierdurch wird es möglich, dass Rollkröper durch Schneid- oder Schlagvorgänge von Endlosmaterialien, wie z.B. Fasern, Strängen oder Stangen abgetrennt werden können und in ständig gleichen Abmessungen vorliegen, was die Voreinstellung einer bestimmten Gleitfähigkeit für die Suspensionen jeweils erleichtert.

Eine weitere vorteilhafte Ausbildung besteht darin, dass die Rollkörper aus einem Material mit einem spezifischen Gewicht bestehen, welches im Wesentlichen dem spezifischen Gewicht der Flüssigkeit in der Suspension entspricht. Ein Unterschied in den spezifischen Gewichten von Flüssigkeit und Festkörpern von 20-30 % ist - je nach Ausbildung und Zähigkeit der Suspensionsbildner - hierbei noch unkritisch.

Durch eine solche Ausbildung lässt sich eine gleichmäßige Verteilung der Rollkörper während des normalen Betriebszustandes - d.h. nicht im Notlauf - und auch bei der Rollreibung zwischen relativ zueinander bewerten Teilen erreichen. Ein Absenken durch die Schwerkraft, eine Verlagerung oder unerwünschte partielle Anhäufung von im Fahrzeugrad befindlichen Rollkörpern durch Umfangs- oder Fliehkräfte kann dadurch sicher vermieden werden.

Bei einer tonnen- oder zylinderförmigen Ausbildung der Rollkörper oder auch bei der bereits genannten kugelförmigen Ausbildung lassen sich hier vorteilhaft Kunststoffe einsetzen, wobei Rollkörper gleicher Form dann aus Kunststofflasern bzw. Kunststoffsträngen abgetrennt werden.

Dabei können auch Reststoffe bzw. Kunststoffe, die in einem Recylclingverfahren wieder aufgearbeitet wurden, Verwendung finden. Geeignet für einen solchen Einsatz sind insbesondere vorgefertigte Granulate, Pellets oder Kurzfasern.

Vorteilhafterweise und zur Aufrechterhaltung eines zufriedenstellenden Rollverhaltens weisen die Rollkörper einen Durchmesser von 0,5 - 2 mm auf. Die Ausbildung einer zufriedenstellenden Rollreibung hängt hierbei natürlich auch ab von der Elastizität bzw. der Plastizität der Rollreibkörper und der Reibpartner. Es hat sich jedoch gezeigt, dass im Durchmesserbereich 0,5 - 2mm, also in einem Bereich eines nicht zu kleinen Durchmessers, einerseits eine gute Rollreibung und andererseits auch eine sichere Verteilung und Ortsstabilität der Rollkörper innerhalb der Suspension erreichbar ist. Weiterhin ist in den genannten Vorzugsbereichen auch bei Kunststoffrollkörpern die Scherfestigkeit des Werkstoffes in aller Regel groß genug, um bei gleichzeitig wirkender Druckbelastung Rollreibungsverhältnisse ohne Materialschädigungen aufrechterhalten zu können.

Vorteilhafterweise wird die Suspension sehr zäh eingestellt und als Beschichtung innerhalb der Reifenkavität aufgebracht. Durch eine solche lediglich auf der Innenseite von rotationssymmetrischen Teilen aufliegende Schicht vermeidet man etwa durch Beschleunigungkräfte der Unwuchteinflüsse hervorgerufene Verschiebungen oder Anhäufungen der Suspension, die wiederum Unwuchten verstärken können. Solche Effekte können dann aufteten, wenn die Suspension in besonderen Taschen, in balgartigen Hohlräumen, oder auch als gefüllte Kugeln innerhalb der Reifenkavität eingebracht wird.

In einigen Fällen ist allerdings auch eine solche Ausbildung möglich, insbesondere dann, wenn die zur Auswahl stehenden genannten Anordnungen innerhalb von Hohlräumen, Bälgen, Kugeln, Vertiefungen etc. herstellungstechnisch einfach und so ausgebildet sind, dass die Wandungen der Behältnisse die Suspension sicher einschließen und als solche den Rollreibungsvorgang nicht stören können. Hier würden sich etwa über den Umfang verlaufende oder verteilte Taschen, Rillen oder Nuten anbieten, die lediglich im Notlauf gequetscht würden und damit das Gleitmittel freigeben könnten. Dabei ist jedoch die Viskosität des dann verwendeten Gleitmittels so einzustellen, dass eine gleichmäßige Verteilung über die Gesamtfläche, die im Notlauf beansprucht wird, gewährleistet ist.

Vorteilhafterweise ist die in der Suspension verwendete Flüssigkeit als Bingham'sche Flüssigkeit ausgebildet, so dass erst bei einer entsprechenden Druckbelastung eine Fließfähigkeit eintritt. Durch das Aufbringen einer solchen Suspension als Beschichtung innerhalb der Reifenkavität erreicht man eine sichere gleichmäßige und stabile Verteilung der Rollkörper auch bei höheren Temperaturbelastungen.

Bei einem notlaufgeeigneten Fahrzeugrad, welches mit einem innerhalb des Reifenhohlraumes befindlichen Notlaufstützkörper auf der Felge ausgerüstet ist, wird das Gleitmittel vorteilhafterweise als Beschichtung auf der Außenseite des Notlaufstützkörpers aufgebracht. Durch eine solche Ausbildung ändert man nichts an dem Fertigungsverfahren für Felge und/oder Reifen, sondern erreicht lediglich durch Hinzufügung eines weiteren Konstruktionselementes, nämlich des Notlaufstützkörpers, der bereits mit einer solchen Suspensionsbeschichtung versehen ist, hervorragende Notlaufeigenschaften in Verbindung mit einer Rollreibung der relativ zueinander bewegten Teile.

Vorteilhafterweise ist als Suspension eine mit einem Anteil von Festkörpern aus Glas, Flugasche oder Sand, jeweils einzeln oder als Gemisch, versehene Flüssigkeit innerhalb der Reifenkavität eingebracht. Eine solche Festkörperfraktion aus im wesentlichen inerten Stoffen mit sphärischer Oberfläche lässt sich leicht entsorgen bzw. in ein Recycling überführen und nutzt zudem preiswerte und ständig verfügbare Rohstoffe. Gleiches gilt für ein Gemisch, das Kunststoffanteile, etwa Kunststoffgranulat, insbesondere Recycling-Granulat, enthält.

Besonders vorteilhaft ist die Ausbildung gemäß den Merkmalen des Anspruchs 17, bei der der Notlaufstützkörper als schalenförmiger Ringkörper innerhalb des Luftreifens ausgebildet ist, der eine den Reifen im Schadensfall abstützende Notlauffläche aufweist und sich mit seinen beiden axial äußeren Wandungsbereichen über ringförmige Stützelemente auf der Radfelge abstützt. Ein schalenförmige Stützkörper kann einfach in seiner Notlaufstützfläche optimiert und mit geringem Gewicht hergestellt und in einfacher Weise ausgetauscht werden.

Besonders vorteilhaft ist die Ausbildung gemäß den Merkmalen von Anspruch 18. Hierbei ist mindestens eins der mindestens drei Teile, welche den Notfaufstützkörper bilden, und sich zusammensetzen aus schalenförmigem Ringkörper und mindestens zwei ringförmigen Stützelementen, als separates und erst bei der Montage des Reifens auf die Felge den Notlaufstützkörper komplettierendes Bauteil ausgebildet. Die Ausbildung der den Notlaufstützkörper bildenden Teile in einer Weise, die eine Komplettierung erst bei der Montage ermöglicht, erlaubt neben einer bisher unerreicht variablen Gestaltung des Notlaufstützkörpers auch einen beliebig auf jede Felgen- und Reifenform anpassbaren Vor- oder Teilfertigungsgrad eines Notlaufstützkörpers, der die jeweiligen geometrischen Gegebenheiten optimal berücksichtigen läßt.

Mindestens einer der axial äußeren Wandungsbereiche des schalenförmigen Ringkörpers ist gemäß Anspruch 32 vorteilhafterweise mit dem zugehörigen ersten ringförmigen Stützelement lösbar verbunden und mindestens das dem anderen der axial äußeren Wandungsbereiche des schalenförmigen Ringkörpers zugehörige zweite ringförmige Stützelement ist in axialer Richtung elastisch verformbar und / oder verschwenkbar ausgebildet. Die lösbare Verbindung erlaubt eine außerordentlich einfache Montage des Reifens auf die Felge, bei der der schalenförmige Ringkörper - gegebenenfalls in Verbindung mit schon weiteren Teilen - zunächst lose innerhalb der Reifenkavität plaziert wird und in üblicher Weise zunächst ein Reifenwulst und gegebenenfalls als ein Teil des Notlaufstützkörpers ein erstes Stützelement über das Tiefbett auf die eine Felgenschulter aufgezogen wird. Danach kann dann die lösbare Verbindung zwischen dem in der Reifenkavität befindlichen schalenförmigen Ringkörper und dem ersten Stützelement nach entsprechender Positionierung des Ringkörpers geschlossen werden. Durch die Ausbildung des zweiten ringförmigen Stütztelementes als in axialer Richtung elastisch verformbar und/oder verschwenkbar, wird bei der Montage zum Aufziehen des zweiten Reifenwulstes der zweite Stützkörper zur Reifenmitte hin elastisch eingeformt, so daß die Montage noch einfacher wird. In gleicher Weise kann bei einem etwa aufgrund von entsprechender Laufleistung notwendig werdenden Reifenwechsel der bereits in der Reifenkavität befindliche schalenförmige Ringkörper in seiner Verbindung mit dem zugehörigen Stützelement gelöst werden, wonach der Reifen ohne weitere Probleme von der Felge gezogen und ausgetauscht werden kann, während die übrigen Elemente, mindestens aber der schalenförmige Ringkörper, mit einem neu aufzuziehenden Reifen weiter verwendet werden können.

Vorteilhafterweise sind die Abstützungen mindestens des ersten Stützelementes auf der Felge und/oder die zugehörige lösbare Verbindung als Rast- oder Schnappverbindung ausgebildet. Hierdurch wird eine weitere Montageerleichterung erreicht und gleichzeitig bei entsprechender elastischer Ausbildung der Rast- oder der Schnappmechanismen eine einfache und genaue Positionierung des Ringkörpers ermöglicht. Beim Austausch des Reifens ist eine solche Rast- oder Schnappverbindung ebenso leicht zu lösen und ein weiteres Mal genau zu positionieren.

In einer vorteilhaften Weiterbildung ist die lösbare Verbindung zwischen dem einen axial äußeren Wandungsbereich des schalenförmigen Ringkörpers und dem zugehörigen ersten ringförmigen Stützelement sowie dessen Abstützung auf der Felge als ein nach der Radmontage in axialer und radialer Richtung wirkendes Festlager für den Ringkörper ausgebildet. Das als Festlager ausgebildete Stützelement weist hierbei zur Aufnahme der radial äußeren Wandungsbereiche des schalenförmigen Ringkörpers einen Ringbund auf, der den schalenförmigen Ringkörper axial und radial fixiert. Mit Hilfe eines solchen Ringbundes lässt sich sowohl eine Fixierung des Ringkörpers am Stützelement als auch eine lösbare Verbindung gleichermaßen einfach realisieren und führt in beiden Fällen zu einer sicheren Auflage und Halterung und zum Aufbau eines hoch belastungsfähigen Notlaufstützkörpers. Durch eine solche Ausführung erhält man auch eine sichere Fixierung des schalenförmigen Ringkörpers bzw. des gesamten Notlaufstützkörpers schon während der Montage, was eine zusätzliche Erleichterung für das Aufziehen des zweiten Reifenwulstes bedeuten kann. Andererseits ist es hierdurch aber auch möglich, bereits vor Aufziehen des zweiten Reifenwulstes während der Montage den korrekten Sitz und die Positionierung des schalenförmigen Ringkörpers zu kontrollieren und somit ohne großen Montageaufwand eine außerordentlich sichere Notlauffunktion zu garantieren.

Bevorzugt ist die Ausbildung gemäß Anspruch 19. Die schalenförmige Wandung dient der unteren Seitenwand als zusätzliche Anlagefläche und verbessert hierdurch die Handlingeigenschaften des Fahrzeugrades.

Letztfich kann durch die erfindungsgemäße Ausbildung des Fahrzeugrades der Aufbau der Notlaufeigenschaft bzw. des Notlaufstützkörpers zu einem beliebigen Zeitpunkt während oder nach der Reifenkonfektionierung durchgeführt werden, während bisher immer bereits innerhalb der Fertigungsplanung entschieden werden musste, wann und welche Mengen von Reifentypen mit Notlaufeigenschaften herzustellen sind.

Vorteilhafterweise ist mindestens eines der Stützelemente als eine mit den Reifenwülsten verbundener und sich innerhalb des Reifenhohlraumes im Wesentlichen einwärts erstreckender gummielastischer Bestandteil des Reifens ausgebildet.

Je nach dem gewählten Material für die Stützelemente kann deren Verbindung mit den Reifenwülsten nun zu unterschiedlichen Zeitpunkten geschehen, beispielsweise durch Vulkanisieren direkt während der Vulkanisation des Fertigreifens oder durch Kaltvulkanisation oder Klebung in einem besonderen "Finishing-Betrieb" oder auch direkt bei dem Reifenzulieferer bzw. bei dem Betrieb, der den Reifen auf die Felge zieht.

Eine weitere vorteilhafte Ausbildung besteht darin, dass mindestens eines der Stützelemente durch Anschäumen eines in einer Form aushärtbaren elastischen Flüssigschaums vor dem Aufziehen des Reifens auf die Felge an den Reifenwülsten befestigt wird. Durch das Einsprühen eines Schaumes in eine in Bezug auf die Reifenwülste positionierbare Form ergibt sich eine sehr gute Anpassung der Stützelemente an die Oberfläche der unteren Reifenseitenwand.

Vorteilhafterweise weist das zweite ringförmige Stützelement unterhalb der form- und/oder kraftschlüssigen festen Verbindung mit den äußeren Wandungsbereichen des schalenförmigen Ringkörpers einen über den Umfang verlaufenden und sich quer zur Umfangsrichtung von der Reifenseite zur Reifenmitte hin über eine Teilbreite des Stützelementes erstreckenden Einschnitt auf. Hierdurch erreicht man, dass im Querschnitt des Stützelementes eine im Hinblick auf die Biegesteifigkeit nachgiebige schmale Zone ausgebildet wird, die ein besonders einfaches Verformen bzw. ein gelenkähnliches Umklappen des Stützelementes und damit eine weiter vereinfachte Montage erlaubt.

Wie bereits oben erwähnt, ergibt sich durch die Funktionsaufteilung in Loslager und Festlager und durch die übrigen bereits genannten Merkmale der Vorteil, dass der Querschnitt insbesondere des als Loslager ausgebildeten Verbindungsbereiches beliebig und in seiner Form auf den bestmöglichen Kompromiß zwischen Montagefreundlichkeit und ausgezeichneten Produkteigenschaften im Betrieb angepasst werden kann.

Neben der Verkleinerung der Stützelementmasse als solche erfolgt auch eine nähere Zentrierung und Anbindung der bewegten Massen an die Felgen, wodurch sich im Betriebszustand eine hohe Toleranz gegenüber Unwuchteinflüssen ergibt. Auch wird das Gewicht des Rades lediglich geringfügig erhöht. Darüber hinaus erreicht man durch die gleichermaßen erfolgende felgennahe Anordnung des schalenförmigen Ringkörpers ein exzellentes Notlaufverhalten sowie die Möglichkeit, ein solches Notlaufsystem für nahezu jedes Höhen-Breiten-Verhältnis eines Reifens vorsehen zu können.

Vorteilhafterweise ist der schafenförmige Ringkörper gemäß Anspruch 22 als nicht geschlossener Schlitzring ausgebildet. Hierdurch ergibt sich eine weitere Möglichkeit der Verkleinerung der Stützelemente sowie der felgennahen Anordnung aller Notlaufbauteile. Durch die schlitzförmige Ausbildung kann der schalenförmige Ringkörper bzw. dessen äußere Wandungsbereiche in Durchmessern hergestellt werden, die die Außendurchmesser der Felge nicht oder nur unwesentlich überschreiten. Bei der Montage besteht durch eine solche Ausbildung nämlich die Möglichkeit, durch schraubenförmiges Ausfedern des geschlitzten Ringes diesen auf die Felge zu bringen. Nach dem er seine Sitzposition auf der Felge erreicht hat, nimmt der schalenförmige Ringkörper dann wieder seine ursprüngliche Form mit geringeren Durchmessern ein.

Eine vorteilhafte Weiterbildung dieser Ausbildung besteht darin, dass im Schlitzbereich des Ringkörpers mindestens ein während der Montage wirkendes und den Durchmesser des Ringkörpers vergrößerndes Spreizelement angeordnet ist, welches einen leicht vergrößerten Montagedurchmesser erzeugt, so dass die Einlage auf die Felge problemlos durchführbar ist. Liegt dann der Ringkörper auf der Felge, kann durch beispielsweise das Eindrücken einer Spreizfeder zur Innenseite des Ringkörpers hin der Schlitz durch Zuschnappen geschlossen werden, wodurch der Ringkörper in seinen verkleinerten Betriebsdurchmesser zurückgeführt wird. Beim Reifenwechsel kann dann durch Spreizen des Reifenkörpers mit einem Werkzeug die Spreizfeder in ihre Haltestellung zurückschnappen, wonach der Ringkörper entnommen und gegebenenfalls auf eine neue Felge eingesetzt werden kann.

Insbesondere bei der Anwendung im Zusammenhang mit einem geschlitzten Ring ergibt sich eine weitere vorteilhafte Ausbildung dadurch, daß mindestens einer der axial äußeren Wandungsbereiche des schalenförmigen Ringkörpers an seinem Endbereich ein Verklammerunngsprofil aufweist, wobei das zugehörige Stützelement hierzu komplementär ausgebildet ist und eine dem Verklammerungsprofil entsprechende Negativform aufweist.

Das Stützelement kann dann leicht in Umfangsrichtung auf einen axial äußeren Wandungsbereich des gespreizten Ringkörpers aufgeschoben werden, wodurch eine sichere und je nach Elastizität des Stützelementes in Radialrichtung nahezu unlösbare Verbindung aufgebaut wird.

Andererseits ergibt sich mit einer solchen Ausbildung bei entsprechend großer Elastizität des Stützelementes und mit einer Anpassung des Verklammerungsprofils eine weitere Möglichkeit zur Ausbildung einer Rast- oder Schnappverbindung.

In einer weiteren vorteilhaften Ausbildung sind zwischen den ringförmigen Stützelementen ein oder mehrere über den Felgenumfang verteilte und die Stützelemente axial spreizende federelastische Elemente angeordnet

Die Merkmale des Anspruchs 23 beschreiben eine weitere vorteilhafte Ausführung eines Fahrzeugrades, bei dem der schalenförmige Ringkörper auf seiner Notlauffläche gummielastische Aufllagen aufweist. Eine solche Ausbildung erhöht in deutlichem Maße den im Notlauf vorhandenen Fahrkomfort. Der Querschnitt der ringförmigen Stützelemente kann - etwa aus Gründen der Gewichtsreduzierung - über den Umfang natürlich auch variabel gestaltet werden. Denkbar sind hier Formen, bei denen die Abstützung auf der Felge nur bereichsweise im Abstand von jeweils 60° über den Umfang erfolgt, sodaß eine Anlage der Stützelemente an die Felgenschulter nur über die bereichsweise angeordneten "Stützfüße" erfolgt und die Zwischenbereiche durch verminderte Querschnitte überbrückt werden. Ebenso kann lediglich die Breite der Stützelemente über den Umfang bereichsweise reduziert werden.

Die Ausbildung gemäß den Merkmalen von Anspruch 24 ermöglicht es in vorteilhafterweiseein Fahrzeugrad für Luftbereifung mit einem Notlaufstützkörper bereitzustellen, welcher leicht und ohne besonderen Aufwand auch auf Tiefbettfelgen montiert werden kann, welches im Notlauf ein sicheres Fahrverhalten und ein ausreichend formstabiles Abrollen aufrechterhält, welches ohne übermäßige Gewichtserhöhung Seitenführungskräfte übertragen kann und einem Abschälen des Reifens sicher entgegenwirkt, und welches flexibel die - auch nachträgliche - Kombination mit bereits bestehenden Reifentypen und - konfektionen erlaubt, so dass eine separate Fertigung und Logistik nicht zwangsläufig vorgehalten werden muß.

Hierbei sind die ringförmigen Stützelemente als Verbundkörper ausgebildet, die über die radiale Höhe der Stützkörper aus mehreren miteinander verbundenen Materialschichten unterschiedlicher Elastizität bestehen.

Eine solche Ausbildung der ringförmigen Stüzelemente als Verbundkörper ermöglicht die Bereitstellung einer genau auf die erforderlichen Eigenschaften bei der Montage und im Notlauf einstellbare Flexibilität bzw. Elastizität der Stützelemente. Durch die miteinander verbundenen Materialschichten unterschiedlicher Elastizität läßt sich bei entsprechender Schichtung und Stufung der Elastizitäten der einzelnen Materialschichten die Formstabilität der ringförmigen Stützelemente so auslegen, daß nicht nur in radialer und axialer Richtung eine unterschiedliche Verformbarkeit der Stützelemente vorhanden ist, sondern daß sich auch über die radiale Höhe der Stützelemente eine mit dem Abstand zur Felge sich in geeigneter Weise ändernde Verformbarkeit bereitgestellt wird.

Bei einer axialen Belastung der Stützelemente, die zum einen bei der Montage und zum anderen im Notlauf, hier insbesondere bei der Kurvenfahrt, auftreten kann, ist damit eine Möglichkeit der konstruktiven Anpassung auf diese beiden wesentlichen axialen Belastungsfälle gegeben, während gleichzeitig die Tragfähigkeit in radialer Richtung beim Notlauf nicht beeinträchtigt wird.

Vorteilhafterweise ist der Ringkörper als ein geschlitzter Ringkörper mit einem im wesentlichen in axialer Richtung verlaufenden Öffnungsschlitz ausgebildet.Hierdurch ergibt sich eine Möglichkeit der Verkleinerung der Stützelemente sowie der felgennahen Anordnung aller Notlaufbauteile. Durch die Ausbildung der Stützelemente als für die axiale Belastung während der Montage ausreichend und definiert verformbare Verbundkörper und durch die schlitzförmige Ausbildung des Ringkörpers kann der schalenförmige Ringkörper bzw. dessen äußere Wandungsbereiche in Durchmessern hergestellt werden, die die maximalen Durchmesser der Felge nicht oder nur unwesentlich überschreiten. Bei der Montage besteht durch eine solche Ausbildung nämlich die Möglichkeit, durch axiale Verformung der Verbundkörper und schraubenförmiges Ausfedern des geschlitzten Ringes auf einen vergößerten Montagedurchmesser den Ringkörper auf die Felge zu bringen Dann nehmen sie wieder ihre ursprüngliche Form mit geringeren Durchmessern ein.

Eine weitere vorteilhafte Ausbildung besteht darin, daß der Verbundkörper eine radial obere und mit dem Ringkörper verbundene Materialschicht beinhaltet, die eine niedrigere Elastizität aufweist als die anschließenden radial unteren Materialschichten.Durch eine solche Ausbildung erreicht man in den Bereichen, die bei axialer und über die Felge übertragenen Belastung der Stützelemente der größten Biegebeanspruchung ausgesetzt sind, eine erhöhte Formfestigkeit, so daß eine sprunghafte Änderung der Biegelinie - im Extremfall ein Ausknicken des Stützelemenes - im Bereich des Anschlusses an den Ringkörper sicher vermieden wird. Auch kann man hierdurch den radial oberen Teil des das Stützelement bildenden Verbundkörpers in seiner Formfestigkeit der des Ringkörpers anpassen, wodurch eine durchaus gewünschte starre Aufnahme gebildet wird. Auch können mit einer solchen Ausbildung axiale Belastungen auf den Ringkörper übertragen und, bei entsprechender Konstruktion des Ringkörpers, federnd aufgenommen werden. Vorteilhafterweise beinhaltet der Verbundkörper ein aus mindestens drei Materialschichten bestehendes Verbundpaket, dessen radial obere Materialschicht und dessen radial untere Materialschicht eine höhere Elastizität aufweisen als die zwischenliegende(n) Materialschicht(en).Zum einen wird hierdurch die oben genannte starre oder steifere Aufnahme im Verbindungbereich zwischen Ringkörper und Stützelement ermöglicht, die natürlich durch die bereits geschilderte Anordnung einer mit dem Ringkörper verbundenen Materialschicht mit einer im Vergleich zu den anschließenden radial unteren Materialschichten niedrigeren Elastizität noch verbessert wird. Zum anderen wird auch im radial unteren und nahe der Felge angeordneten Bereich des Stützelementes der Verbundkörper ebenfalls mit niedrigerer Elastizität und damit höherer Formsteifigkeit ausgebildet. Insbesondere in einer vorteilhaften Weiterbildung, bei der die radial untere Materialschicht auf der Felge aufliegt, wird so ein sicherer Sitz auf der Felge erreicht und ein Auswandern des Stützelementes ins Tiefbett bei axialen Belastungen im Notlauf sicher vermieden.

Vorteilhafterweise ist die radial obere und mit dem Ringkörper verbundene Materialschicht mit dem jeweiligen axial äußeren Wandungsbereich des Ringkörpers kraftschlüssig verbunden.Eine solche kraftschlüssige Verbindung, die beispielsweise als Klebverbindung ausgeführt oder aber auch durch Anvulkanisieren erreicht werden kann, bietet sich als einfach herzustellende Verbindung insbesondere für die Großserie an, da hier auf eine automatisierbare und bewährte Verbindungstechnik zurückgegriffen werden kann. Dabei ist durch die Ausbildung des Verbundkörpers aus mehreren Materialschichten und dessen gestufter Elastizität eine auch unter dynamischer Belastung hochfeste Verbindung erreichbar. Selbstverständlich kann eine solche Verbindung je nach Einsatzfeld auch als teilweise oder vollständig formschlüssige Verbindung, etwa durch Nieten, Schrauben oder - gegebenenfalls lösbare - Rastelemente ausgeführt werden, wobei zusätzlich die Möglichkeit eines Austausches der Stützelemente, etwa periodisch bei jedem Reifenwechsel, ermöglicht wird.

In einer weiteren vorteilhaften Ausbildung sind zur Verbindung des axial äußeren Wandungsbereiches des Ringkörpers als erstem Teil und der radial oberen Materialschicht des Verbundkörpers als zweitem Teil entweder der axial äußere Wandungsbereich des Ringkörpers oder die radial obere Materialschicht mit einem Profilpositiv versehen, wobei der jeweils andere Teil ein zur Aufnahme des Profilpositivs komplementäres Profilnegativ aufweist. Hierdurch ergibt sich nicht nur eine einfache herzustellende Ausbildung einer lösbaren Verbindung zwischen Ringkörper und Stützelement, sondern auch die Möglichkkeit der Herstellung des das Stützelement bildenden Verbundkörpers als Strangprofil, welches abgelängt zur Verfügung gestellt und mit dem Ringkörper entweder vor oder während der Montage des Notlaufstützkörpers verbunden wird.

Insbesondere bei der bereits genannten Ausführung des Ringkörpers als Schlitzring können nach Ausfedern des geschlitzten Ringes Stützelement und Ringkörper mit Profilpositiv und -negativ einfach ineinander geschoben werden. Ebenso kann ein periodischer Austausch der Stützelemente erfolgen. Gleichermaßen wird der Herstellungsprozeß einer größeren Typenpalette insgesamt vereinfacht, da bei festgelegter Gestaltung von Profilpositiv und -negativ etwa ein Standard-Ringkörper mit für unterschiedliche Reifen- und Fahrzeugtypen angepaßten Stützelementen unterschiedlicher Verbund-Konstruktion kombiniert werden kann.

Bei entsprechend elastischer Ausbildung der Materialien für die Profilpositiv- Profilnegativ-Verbindung läßt sich auch eine ggf. lösbare Rast- oder Schnapverbindung gestalten.

In einer weiteren vorteilhaften Ausbildung ist der axial äußere Wandungsbereich des Ringkörpers mit einer die obere Materialschicht des Verbundkörpers teilweise umgebenden Aufnahme versehen, wobei der Verbundkörper aus mindestens drei Materialschichten besteht, dessen radial obere und durch der Aufnahme des Ringkörpers teilweise umgebene Materialschicht und dessen radial untere und auf der Felge aufliegende Materialschicht eine höhere Elastizität aufweisen als die zwischenliegende(n) Materialschicht(en). Durch eine solche Konstruktion wird eine Federkennlinie des Stützelementes bereitgestellt, die bei steigender radialer Belastungen stark progressiv verläuft bis zur Blockade der ursprünglichen und ohne Belastung vorhandenen Elastizität der oberen Materialschicht(en) des Verbundkörpers. Dies geschieht dadurch, das bei entsprechender Auslegung der oberen und durch der Aufnahme des Ringkörpers teilweise umgebenen Materialschicht bei radialer Belastung des Verbundkörpers und Einfederung der oberen Materialschicht diese zunehmend und schließlich vollständig von der starren Aufnahme des Ringkörpers umschlossen und in diesem Verformungszustand durch den dann nicht mehr vorhanden Federweg / Federraum zu einem starren und bei weiter steigender Belastung völlig unelastischen Element wird.

Durch entsprechende Auslegung der Tiefe der Aufnahme erreicht man dann auch eine teilweise Aufnahme der radial weiter unten liegenden Materialschicht des Verbundkörpers, deren Elastitzität dann ebenfalls progressiv vermindert wird.

Gleichermaßen folgt mit zunehmendem Eintauchen der oberen Materialschichten des Verbundkörpers in die Aufnahme die Elastizität des Stützelementes auch bei axialer Belastung einer stark progressiven Kennlinie, wobei axiale Kräfte dann zunehmend durch den Ringkörper aufgenommen werden.

Es wird also ein Notlaufstützkörper mit einem schalenförmigen Ringkörper bereitgestelt, der sich mit seinen beiden axial äußeren Wandungsbereichen über ringförmige Stützelemente auf der Radfelge abstützt, und dessen Stützelemente ohne radiale Belastung in axialer Richtung elastisch und verformbar sind, während bei zunehmender radialer Belastung die Elastizität in radialer und axialer Richtung zunehmend blockiert wird.

Die Abnahme der Elastizität in axialer Richtung unter radialer Belastung beinhaltet weiterhin den großen Vorteil, das beim Notlauf die zunehmende axiale Formstabilität der am Reifenwulst anliegenden Stützelemente ein Eintauchen der Reifenwülste ins Tiefbett und damit das gefürchtete Abspringen des Reifens von der Felge sicher verhindern. Außerdem werden die Handlingeigenschaften durch die progressive axiale Stützwirkung verbessert.

Der Notlaufstützkörper läßt sich in idealer Weise im unbelasteten Zustand montieren, während im belasteten Zustand die Verformbarkeit bzw. Elastizität mit der Höhe der Belastung progressiv in gewünschter Weise abnimmt.

Vorteilhafterweise bestehen die Materialschichten höherer Elastizität aus Gummi und die Materialschichten niedrigerer Elastizität aus Kunststoff. Hierdurch ergibt sich eine leichte und einfach herzustellende Konstruktion, wobei die Elastizität nicht nur durch die Form und Gestaltung der Materialschichten im Verbundkörper beeinflußt werden kann, sondern auf einfache Weise - z.B. durch unterschiedliche Gummimischungen oder Dichten (Schaumgewichten) des Kunststoffes - auch innerhalb der jeweiligen Materialien als solchen.

In einer vorteilhaften Weiterbildung gemäß Anspruch 25 ist der Notlaufstützkörper als umlaufender schalenförmiger Ringkörper ausgebildet, der aus mindestens zwei durch jeweils eine radiale Einschnürung voneinander getrennten nach radial außen gewölbten Bereichen besteht und der sich über seine beiden axial äußeren Wandungsbereiche abstützt. Durch die Kontur, die im wesentlichen die Aufteilung der Notlauffläche in zwei aufliegende Schulterbereiche und einen mehr oder weniger stark ausgeprägten Rücksprungbereich beinhaltet, ergibt sich im Zusammenwirken mit der Kurvenform, der Krümmung und den Kraftaufnahme- und Elastizitätseigenschaften der Stützelemente ein Laufverhalten im Pannenlauf, welches die Fahrbereitschaft des Fahrzeuges vollständig erhält und in der Handhabung sich nur geringfügig vom Normallauf unterscheidet.

Zudem werden bei einer solchen Kontur die im Notlauf auf den Ringkörper einwirkenden Radialbeastungen in den den Stützelementen naheliegenden Schulterbereichen konzentriert und somit ohne große Hebelarme und Biegemomente in die als Verbundkörper ausgebildeten Stützelemente eingeleitet, was die Funktionsweise der Stützelemente, insbesondere bei einer Ausbildung der axial äußere Wandungsbereich des Ringkörpers mit einer die obere Materialschicht des Verbundkörpers teilweise umgebenden Aufnahme, besonders unterstützt.

Auch ist bei solchen Ringkörpern die Fähigkeit zur Aufnahme von Seitenführungskräften besonders ausgeprägt, da durch den in den mittleren Bereichen der Notlauffläche bereitgestellten Rücksprung sich die mittleren Teile der Reifenlauffläche bzw. des Unterbaus in die Krümmung einschmiegen können und so in Bezug auf Seitenkräfte einen Formschluss aufbauen können, der die auf die Reifenseiten wirkende Zugkräfte reduziert und somit einem Abspringen des Reifens entgegenwirkt. Die Krümmungsradien sind dabei durch stetig ineinander übergehende Krümmungsradien so ausgebildet, dass im Zusammenwirken mit der Laufflächendicke des Reifens Punkt- oder Linienbelastungen, die zur Zerstörung der Lauffläche führen könnten, nicht auftreten.

Ein weiterer Vorteil eines mit solchen Krümmungen ausgebildeten schalenförmigen Ringkörpers besteht darin, dass während des Notlaufs sehr hohe Punktbelastungen auch etwa beim Überfahren einer Bordsteinkante, aufgenommen werden können und durch die mit Hilfe der Formgebung erhöhte Steifigkeit des schalenförmigen Ringkörpers eine gleichmäßige und für die Felge unschädliche Lastverteilung sich einstellt.

Ein solcher Notlaufstützkörper, der in aller Regel aus einem im Vergleich zu den Stützelementen unelastischen bzw. hartem Material wie Stahl, Aluminium oder verstärktem Kunststoff hergestellt wird, lässt sich durch die Materialwahl in Bezug auf Seitenführungskräfte und Belastungen beim Notlauf beliebig anpassen.

Der schalenförmige Ringkörper kann zudem durch auf seiner zur Felge gerichteten Unterseite befindliche und in Umfangs- oder Axialrichtung verlaufende Rippen verstärkt werden, was das Auffangen von Belastungsspitzen und eine weitere Gewichtseinsparung durch Reduzierung der Wanddicke in weniger belasteten Bereichen erlaubt.

Die Ausbildung gemäß den Merkmalen von Anspruch 26 ermöglicht es, ein Fahrzeugrad für Luftbereifung mit einem Notlaufstützkörper bereitzustellen, welches im Notlauf einerseits ein weiterhin sicheres Fahrverhalten und ein ausreichend elastisches Abrollen aufrechterhält, andererseits ohne übermäßige Gewichtserhöhung Seitenführungskräfte sicher übertragen kann, und darüber hinaus eine Lastverteilung bei einwirkenden Kräften entstehen läßt, die eine Schädigung der Felge sicher vermeidet.

Hierbei wird die Notlauffläche durch die radial äußere Oberfläche eines im Querschnitt schalenförmigen Ringkörpers gebildet, wobei der Ringkörper sich axial von der Felgenmitte zu beiden Seiten über einen Teilbereich der Felgenbreite erstreckt und im Querschnitt in seinen axial äußeren Bereichen eine mit zur Felge geöffneten ersten Krümmungen versehene Kontur aufweist und eine zwischen den zur Felge geöffneten Krümmungen gelegene und mit zum Zenitbereich des Reifens geöffneten zweiten Krümmung versehene Kontur aufweist, wobei die Krümmungen einen oder mehrere ineinander übergehende Krümmungsradien aufweisen und der schalenförmige Ringkörper über ein oder mehrere Stützelemente auf der Felge abgestützt ist. Die Abstützung kann hierher direkt auf der Felge oder auch über an die Felge angepasste Gleitelemente oder über Rollenführungen und -lager erfolgen, so dass eine Reibung im Notlauf minimiert wird.

Durch die Kontur, die im wesentlichen die Aufteilung der Notlauffläche in zwei aufliegende Schulterbereiche und einen mehr oder weniger stark ausgeprägten Rücksprungbereich beinhaltet, ergibt sich im Zusammenwirken mit der Kurvenform, der Krümmung und den Kraftaufnahme- und Elastizitätseigenschaften der Stützelemente ein Laufverhalten im Pannenlauf, welches sich zwar vom Normalfall unterscheidet, jedoch die Fahrbereitschaft des Fahrzeuges vollständig erhält und in der Handhabung sichnur geringfügig vom Normallauf unterscheidet.

Insbesondere die Fähigkeit zur Aufnahme von Seitenführungskräften ist ausgeprägt, da durch den in den mittleren Bereiche der Notlauffläche bereitgestellten Rücksprung sich die mittleren Teile der Reifenlauffläche bzw. des Unterbaus in die Krümmung einschmiegen können und so in Bezug auf Seitenkräfte einen Formschluss aufbauen können, der die auf die Reifenseiten wirkende Zugkräfte auf ein für das Fahrverhalten ungefährliches Maß reduziert und somit sicher ein Abspringen des Reifens von der Felge verhindert. Die Krümmungsradien sind dabei durch stetig ineinander übergehende Krümmungsradien so ausgebildet, dass im Zusammenwirken mit der Laufflächendicke des Reifens Punkt- oder Linienbelastungen, die zur Zerstörung der Lauffläche führen könnten, nicht auftreten.

Ein weiterer Vorteil eines mit solchen Krümmungen ausgebildeten schalenförmigen Ringkörpers besteht darin, dass während des Notlaufs sehr hohe Punktbelastungen auch etwa beim Überfahren einer Bordsteinkante, aufgenommen werden können und durch die mit Hilfe der Formgebung erhöhte Steifigkeit des schalenförmigen Ringkörpers eine gleichmäßige und für die Felge unschädliche Lastverteilung sich einstellt.

In aller Regel ist hierbei der schalenförmige Ringkörper so ausgebildet, dass er sich axial von der Äquatorialebene des Reifens symmetrisch über einen Teilbereich der Felgenbreite erstreckt. Lediglich bei Fahrzeugen mit ausgeprägt starkem Sturz, d.h. mit starker Schrägstellung der Räder, kann es erforderlich werden, auf eine symmetrische Kontur zu verzichten und die Krümmungsbereiche an die Schrägstellung der Räder anzupassen.

Weitere vorteilhafte Ausbildungen sind in den Ansprüchen 27 bis 36 gekennzeichnet.

Die Ausbildung des Ringkörpers gemäß Anspruch 27 im Bereich der zweiten Krümmung mit einem minimalen Durchmesser , der maximal die Größe des maximalen Außendurchmessers der Felge aufweist, läßt sich eine besonders hohe Versteifung hinsichtlich der Biegebelastung erzielen,wodurch die Notlaufeigenschaften weiter verbessert werden. Eine zusätzliche elastische, dämpfende Schicht gemäß Anspruch 28, die im axialen Erstreckungsbereich der zweiten Krümmung radial zwischen dem Bereich der zweiten Krümmung des Notlaufstützkörpers und der Felge angeordnet ist, können die Kräfte zwischen Notfaufstützkörper und Felge besser verteilt werden, Stoßbelastungen reduziert, der Fahrkomfort im Pannenfall verbessert und das Gewicht reduziert werden. Außerdem kann die Schicht als Zentierhilfe für die Montage ausgebidet und genutzt werden

in einer vorteilhaften Ausbildung gemäß Anspruch 29 sind dabei die Stützelemente als Verlängerungen der axial äußeren Bereiche der zur Felge geöffneten ersten Krümmungen und als sich auf der Felge abstützende im wesentlichen ebene Kreisringscheiben ausgebildet.

Während ein Vorteil herstellerseitig darin liegt, dass - je nach Herstellung als einteiliger bzw. als aus mehreren Teilen bestehender Notlaufkörper - ein von einer ringförmigen Ronde ausgehendes Drück- bzw. Roltformgebungsverfahren oder ein mit einfachen Werkzeugen darstellbares Form- oder Spritzverfahren genutzt werden kann, ergibt sich im Hinblick auf die Montage, dass der Notlaufkörper in besonders einfacher Weise auf die Felgenform und -breite angepasst und in seinem im wesentlichen durch die Stützkörper aufgeprägten Federungsverhalten beeinflusst werden kann.

So können beispielsweise mehrere aneinander anschließende und zur Achse des Fahrzeugrades geneigte Kreisringscheiben, die abwechselnd jeweils nach innen und nach außen schräg gestellt sein können, etwa in Form eines Tellerfederpaketes als Stützelemente genutzt werden, so dass in Bezug auf das elastische Kraftaufnahmevermögen des Notlaufstützkörpers eine weitere Anpassungsmöglichkeit gegeben ist.

In einer besonders vorteilhaften Ausbildung ist jedoch eine an den Ringkörper als Verlängerung der axial äußeren Bereiche sich anschließende Kreisringscheibe vorhanden, die in einem Winkelbereich von 75° bis 90°, vorzugsweise 83° zur Radachse geneigt ist, wobei im Querschnitt der Übergang von der mit den ersten Krümmungen versehenen Kontur des Ringkörpers auf die ebenen Kreisringscheiben stufenlos ausgebildet ist.

Im Zusammenspiel mit der Krümmung der Notlauffläche ist die sich durch die 83° Neigung ergebende federnde Abstützung ausreichend für ein gutes Notlaufvethalten und erfordert durch die relativ steile Winkeleinstellung ein Minimum an Material für den Notlaufstützkörper, was wiederum der Gewichtsreduzierung entgegenkommt.

Im Hinblick auf die Anwendung bei besonderen Fahrzeugen, hier etwa im Zweiradbereich, kann es vorteilhaft sein, dass die Stützelemente gemäß Anspruch 30 als ein oder mehrere zwischen dem schalenförmigen Ringkörper und der Felge angeordnete Stützringe ausgebildet sind. Damit ist es möglich, auch bei schmalen Felgen Notlaufstützkörper vorzusehen, wobei deren Stabilität vorteilhafterweise dadurch erhöht werden kann, dass die Stützelemente als ein zwischen schalenförmigen Ringkörpern und Felge angeordneter und im wesentlichen der Breite des schalenförmigen Ringkörpers entsprechende Stützring ausgebildet sind, insbesondere bei einer Ausführung mit mehreren zwischen schalenförmigem Ringkörper und Felge angeordneten Stützelementen können letztere vorteilhafterweise so ausgebildet sein, dass sie in den Anschlussbereichen eine zur Bereitstellung eines Gelenkknotens erniedrigte Elastizität aufweisen. Damit eröffnet sich eine solche Ausführung durch die Möglichkeit des elastischen Biegens der Stützelemente eine einfache Montage des Notlaufstützkörpers auf einteilige Standardfelgen.

Mit dem Ziel einer sicheren Fixierung der Reifenwülste auch im Notlauf lassen sich die Stützelemente so ausbilden, dass sie in den den Reifenwülsten benachbarten Bereichen auf der Felge abgestützt sind und als Wulstsicherung dienen. Somit lassen sich auch Sicken und Vorsprünge in der Felge vereinfachen und damit der Herstellaufwand reduzieren.

Eine vorteilhafte Ausführung, bei der die Stützelemente und der schalenförmige Ringkörper aus gleichem Material, vorzugsweise aus Aluminium oder aus einer Aluminiumlegierung bestehen, erleichtert und vereinfacht die Herstellung und läßt auch im Hinblick auf die spätere Wiederverwertung eine Sortierung und Trennung von Reststoffen mit wenig Aufwand durchführbar werden.

Eine solche Ausführung aus Aluminium erfordert in aller Regel eine zweiteilige Felge oder eine vorgeformte Felge, die nach Aufbringen des Reifens und des Notlaufstützkörpers formgebend auf ihr Fertigmaß verarbeitet wird.

In einer weiteren Ausbildung gemäß Anspruch 31, bei der die Stützelemente und der schalenförmige Ringkörper unterschiedliche Elastizitäten aufweisen, bestehen die Stützelemente aus gummielastischem oder elastoplastischem Material und der schalenförmige Ringkörper aus Aluminium oder einer Aluminiumlegierung. Hier ergibt sich der Vorteil, dass durch die gut verformbaren gummielastischen Materialien der Stützelemente wiederum die Montage und Demontage besonders einfach wird und somit eine einfache Um- oder Nachrüstung im Betrieb befindlicher Fahrzeugräder ermöglicht wird.

Für die Stützelemente können natürlich auch viskoelastische, elastoplastische oder viskoplastische Materialien genutzt werden, die etwa aus Polymeren oder Gummi mit unterschiedlichen Füll- und Zuschlagstoffen in ihren Eigenschaften einstellbar sind.Als gummielastische Materialien finden auch Polyurethanschäume odere andere Elastomerschaumstoffe Anwendung.

Als Aluminiummaterial hat sich die Legierung AL Mn Si 08 bewährt, wobei der schalenförmige Ringkörper im wesentlichen lediglich in einer Dicke von 4 - 6 mm und die gummielastischen oder elastoplastischen Materialien der Stützelemente in einer Dicke von etwa 8 mm ausgebildet sind.

In einer weiteren vorteilhaften Ausbildung sind die Stützelemente aus gummielastischem Material gefertigt und der schalenförmige Ringkörper besteht aus einem im Vergleich zum gummielastischen oder elastoplastischen Material härteren Kunststoff, d.h. aus einem Kunststoff mit höherem Elastizitätsmodul und höherer Festigkeit. Beim Spritzgießverfahren ergeben sich bei einer solchen Ausbildung Vorteil durch einen einfachen Herstellungsprozess, bei dem beim Einspritzen nach dem Bi-Injektions- oder Co-Injektionsverfahren in die vorhandene Form lediglich eine weitere Materialmischung über eine oder mehrere Zusatzdüsen zugeführt werden muss, um den Verlauf der Festigkeiten und der Elastizitäten zu beeinflussen.Diese vorteilhafte Ausbildung kann noch dadurch weiter verfeinert werden, dass der schalenförmige Ringkörper aus faserverstärktem Kunststoff besteht. In solchen Fällen können etwa vorhandene Spritzformen oder Kunststoffgesenke mit z.B. Glasfasermatten teilweise ausgelegt werden, wonach lediglich ein kurzer Einspritzvorgang für das Herstellen genügt. Als weiterer Vorteil bei den Kunststoffen ergibt sich natürlich das auch im Vergleich zum Aluminium weiter reduzierte Gewicht, so dass für die jeweiligen Fahrzeugtypen und Gewichtsbelastungen der Räder die jeweils optimale Materialkombination ausgelegt werden kann.

Die Anbindung der unterschiedlichen Materialien untereinander kann durch Kleben, durch Vulkanisieren, durch Vernetzen oder auch durch Formschluss mittels ineinander verhakter Formen erfolgen, wobei bei jeder Ausbildung aus der zur Verfügung stehenden Vielzahl von Verbindungsmethoden die jeweils passende ausgewählt werden kann. Für den Fall, dass besonders stabile Ganzmetallausführungen der Notlaufstützkörper benötigt werden, etwa bei Rädern von hochbelasteten Behördenfahrzeugen, besteht eine vorteilhafte Ausbildung darin, dass die Stützelemente aus Federstahl und der schalenförmige Ringkörper aus Aluminium bestehen. Hierdurch ergibt sich eine hoheTragfähigkeit des Notlaufstütztkörpers bei gleichzeitig relativ moderater Steigerung des Gewichtes des Rades.

Neben der Nutzung und Ausbildung der materialelastischen Eigenschaften der Stützelemente besteht eine weitere vorteilhafte Ausbildung darin, dass die Stützelemente federnd in radialer Richtung wirkende Sicken, Nuten oder Einschnitte aufweisen, so dass auch formelastische Anteile der Stützelemente mit zur Ausbildung eines optimierten und komfortablen Abrollverhaltens genutzt werden.

Die Ausbildung gemäß den Merkmalen von Anspruch 37, wonach der Notlaufstützkörper als umlaufender schalenförmiger Ringkörper ausgebildet ist, der aus mindestens zwei durch jeweils eine radiale Einschnürung voneinander getrennten nach radial außen gewölbten Bereichen besteht und der sich über seine beiden axial äußeren Wandungsbereiche abstützt, ermöglicht es ebenfalls, ein Fahrzeugrad für Luftbereifung mit einem Notlaufstützkörper bereitzustellen, welches im Notlauf einerseits ein weiterhin sicheres Fahrverhalten und ein ausreichend elastisches Abrollen aufrechterhält, andererseits ohne übermäßige Gewichtserhöhung Seitenführungskräfte sicher übertragen kann, und darüber hinaus eine Lastverteilung bei einwirkenden Kräften entstehen läßt, die eine Schädigung der Felge sicher vermeidet.

Ein solcher Notlaufstützkörper, der in aller Regel aus lediglich einem Material hergestellt wird, beinhaltet bereits die Stützelemente in seinen Seitenbereichen und lässt sich in Bezug auf Seitenführungskräfte und Belastungen beim Notlauf in seiner Notlauffläche beliebig anpassen. Die einstückige Ausbildung erlaubt zudem einfache Formverfahren und damit eine kostengünstige Herstellung.

In einer weiteren vorteilhaften Ausbildung ist der schalenförmige Ringkörper durch auf seiner zur Felge gerichteten Unterseite befindliche und in Umfangs- oder Axialrichtung verlaufende Rippen verstärkt.

Eine solche Ausbildung erlaubt das Auffangen von Belastungsspitzen und eine weitere Gewichtseinsparung durch Reduzierung der Wanddicke in weniger belasteten Bereichen.

Ebenso kann natürlich eine reine Veränderung bzw. Anpassung der Wanddicke des Notlaufstützkörper entweder in den Bereichen der Stützelemente oder über die axiale Erstreckung des schalenförmigen Ringkörpers dazu beitragen, dass eine Gewichtseinsparung ermöglicht wird.

Die Erfindung wird im folgenden anhand der in den Figuren 1 bis 20 dargestellten Ausführungsbeispiele näher erläutert. Hierin zeigen
- Fig. 1: eine Querschnittsdarstellung eines erfindungsgemäßen Fahrzeugrades mit montiertem Fahrzeugreifen,
- Fig. 2: Querschnittsdarstellungen von Ausführungsformen des Füllrings,
- Fig. 3: Querschnittsdarstellungen von Ausführungsformen des Wulstbereichs,
- Fig.4: schematische Darstellung zur Erläuterung der Montage und der Demontage.
- Fig.5: ausschnittsweise Querschnittsdarstellung eines erfindungsgemäßen Fahrzeugrades mit einer weiteren Ausführungsform des Notlaufstützkörpers
- Fig. 6: ein erfindungsgemäßes Fahrzeugrad mit einem Notlaufstützkörper in anderer Ausführung
- Fig. 7: einen Zwischenschritt während der Montage eines Notlaufstützkörpers für ein erfindungsgemäßes Fahrzeugrad gemäß Fig.6
- Fig. 8: einen als geschlitzter Ringkörper ausgebildeten Notlaufstützkörper mit aufgeschobenen Stützelementen in der Ansicht
- Fig. 9: ein Stützelement im Teilschnitt
- Fig. 10: ein Fahrzeugrad mit einem Notlaufstützkörper, bei dem die axial äußeren Wandungsbereiche des Ringkörpers mit einer die obere Materialschicht der Verbundkörper teilweise umgebenden Aufnahme versehen sind
- Fig. 11: ein Fahrzeugrad gemäß Fig. 10 unter Notlaufbelastung
- Fig. 12: eine weitere Ausführungsform eines erfindungsgemäßen einteiligen Notlaufstützkörper aus Aluminium
- Fig. 13: einen erfindungsgemäßen einteiligen Notlaufstützkörper, dessen Stützelementezusätzliche Formelastizität bereitstellen
- Fig. 14: einen aus zwei verschiedenen Materialien bestehenden Notlaufstützkörper
- Fig. 15: einen einteiligen Notlaufstützkörper mit einer umlaufenden Verstärkungsrippe im Mittelbereich.
- Fig. 16: eine ausschnittsweise Darstellung einer weiteren Ausführungsform eines Fahrzeugrads mit Notlaufstützkörper im Querschnitt,
- Fig. 17: Darstellung zur Montage des in der Fig.16 gezeigten Notlaufstützkörpers
- Fig. 18: eine ausschnittsweise Darstellung einer weiteren Ausführungsform eines Fahrzeugrads mit Notlaufstützkörper im Querschnitt
- Fig. 19: eine ausschnittsweise Darstellung einer weiteren Ausführungsform eines Fahrzeugrads mit einem Stützelement und einem sich über eine Teilbreite des Stützelementes erstreckenden Einschnitt.
- Fig.20: eine ausschnittsweise Darstellung einer weiteren Ausführungsform eines Fahrzeugrads.

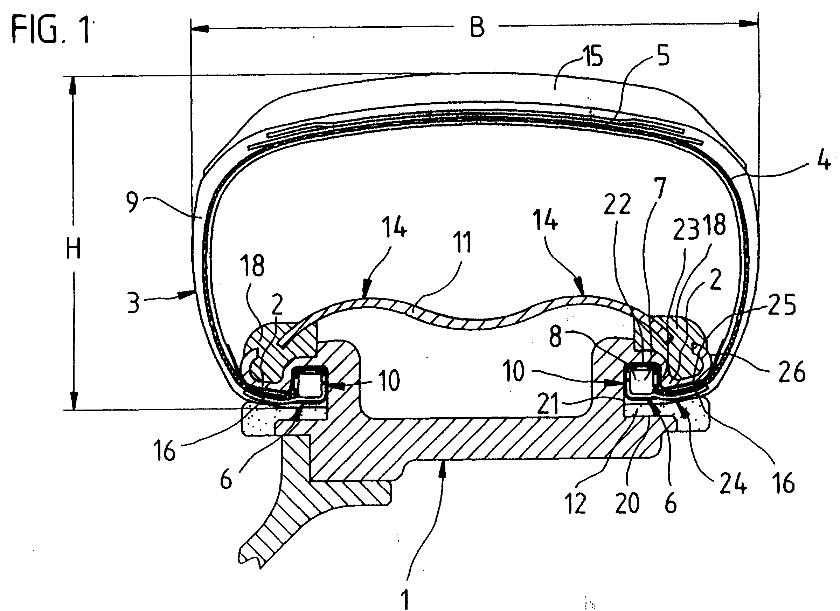

Fig. 1 zeigt ein Fahrzeugrad mit Fahrzeugluftreifen 3 und Felge 1 mit einem Verhältnis von maximaler Höhe H zu maximaler Breite B des Fahrzeugluftreifens H/B ≤ 0,6. Der Fahrzeugluftreifen 3 weist eine über den Umfang des Reifens und vom linken Wulstbereich 6 des Fahrzeugluftreifens zum rechten Wulstbereich 6 reichende, nicht näher dargestellte, innenschicht auf, über die eine Karkasse 4 radialer Bauart mit beispielsweise einer oder zwei Karkassenlagen aufgebaut ist. Im Bereich der Lauffläche ist radial außerhalb der Karkasse 4 ein Gürtel 5 bekannter Bauart mit beispielsweise zwei Gürtellagen aus in Kautschuk eingebetteten Festigkeitsträgern, z.B. aus Stahlcord, aufgelegt. Der Gürtel reicht über den gesamten Umfang des Reifens hinweg und erstreckt sich in axialer Richtung von einem Reifenschulterbereich in den anderen.

Die Stahlcorde verlaufen im spitzen Winkel von beispielsweise 10-30 ° zur Umfangsrichtung. Radial außerhalb der Gürtellagen ist es denkbar, eine nicht dargestellte Gürtelbandage mit im wesentlichen zur Umfangsrichtung verlaufenden Festigkeitsträgern, beispielsweise aus Nylon, aufzuwickeln.

Radial außerhalb des Gürtels bzw. der Gürtelbandage ist in bekannter Weise ein über den Umfang des Reifens reichender und sich von Schulterbereich zu Schulterbereich erstreckender Laufstreifen 15 aus Kautschukmaterial aufgelegt. Im Seitenwandbereich 9 ist Kautschukmaterial auf die Karkasse 4 aufgelegt. Das Seitenwandkautschukmaterial reicht vom Schulterbereich bis zum Wulstbereich 6.

Die einstückig ausgebildete Felge 1 ist an ihren beiden axialen Stirnseiten jeweils mit einer konzentrisch zur Felge angeordneten Ringkammer 10 mit einer radial inneren Ringkammerwand 20. einer axial inneren Ringkammerwand 21, einer radial äußeren Ringkammerwand 22 und einer axial äußeren Ringkammerwand 23 einstückig ausgebildet. Die Ringkammerwand 23 begrenzt das radial nach innen gerichtete Felgenhorn 2. Axial nach innen zwischen Felgenhorn 2 und radial innerer Ringkammerwand 20 ist eine ringförmige Durchgangsöffnung 24 von axial außen zur Ringkammer hin ausgebildet. Das Felgenhorn 2 ist an seiner radial nach innen gerichteten Seite 25 von axial innen nach axial außen konisch erweitert und an seiner Stirnfläche 26 gekrümmt ausgebildet. Ein schalenförmiger Ringkörper 11 erstreckt sich konzentrisch zur Felge innerhalb des Reifens axial von Reifenschulter zu Reifenschulter und stützt sich jeweils durch ein ringförmiges Stützelement 18 auf der radial äußeren Seite des Felgenhorns ab.Der schalenförmige Ringkörper 11 ist mit einer Notlauffläche 14 ausgebildet. Die Stützelemente sind im axialen Bereich der Position der Ringkammer 10 ausgebildet. Die Notlaufoberfläche erstreckt sich in einer Ausführung soweit in axialer Richtung, daß der Gürtel in seinen axialen Randzonen von der Schulter jeweils mit 10 bis 30 %, beispielsweise 25%, axial überdeckt ist.

Der Fahrzeugluftreifen 3 umgreift mit seinen unteren Seitenwandbereichen 16 die nach radial innen erstreckten Hörner 2. Die Krümmung der Stirnfläche 6 des Horns entspricht der gewünschten Reifenkontur im Bereich des Horns.

Am Ende des unteren Seitenwandbereiches 16 ist jeweils der Wulstbereich 6 mit zur Innenseite des Reifens ausgebildeter wulstartiger Verdickung 7 ausgebildet. Der Wulst ist mit einem in das Karkassenlagenende eingebetteten elastisch dehnbaren und elastisch stauchbaren Kern 8 ausgebildet. Im montierten Zustand gemäß Fig. 1 füllt der Wulstbereich 6 unter Formschluß zur axial inneren Ringkammerwand 21 und zur radial äußeren Ringkammerwand 22 sowie zur axial äußeren Ringkammerwand 23 ca. 1/2 bis 2/3 des Ringkammerraums. Radial innerhalb des Wulstes ist ein Füllring 12 radial formschlüssig zum Wulstbereich 6 nach radial außen und nach radial innen zur radial inneren Ringkammerwand 20 ausgebildet, der sich in axialer Richtung von der Ringkammerwand 10 über die gesamte axiale Erstreckung des Wulstbereichs 6 durch die Ringöffnung 24 hindurch nach axial außen erstreckt. Der Füllring 12 ist über den gesamten axialen Erstreckungsbereich der Ringkammer und somit des Wulstes an seiner radial äußeren Mantelfläche zylindrisch und axial außerhalb der Ringkammer parallel zur radial inneren Seite des Felgenhorns 25 konisch erweitert ausgebildet. In der Ausführung von Fig.1 erstreckt sich der Füllring 12 in axialer Richtung bis hin zur axialen Position der Stirnseite 26 des Felgenhorns. Der Wulst steht in der Ausführung gemäß Fig. 1 unter Formschluß nach radial außen, nach axial innen und nach axial außen zu den geschlossenen Ringkammerwänden 22, 23, 21 und durch den radialen Formschluß zum Füllring 12, der seinerseits in radialem Formschluß zur geschlossenen Ringkammerwand 20 ausgebildet ist, auch zur Ringkammerwand 20 in radialem Formschluß. Da der Wulst auf seiner gesamten Oberfläche in formschlüssigem Berührkontakt zur einstückig ausgebildeten Ringkammer bzw. zum Füllring 12 und der Füllring 12 innerhalb der Rinkammer seinerseits mit seiner Oberfläche in vollständigem Berührkontakt zu den Ringkammerwänden bzw. zum Wulst ausgebildet ist, ist die Ringkammer vollständig von Wulst und Füllring ausgefüllt. Darüber hinaus steht der untere Seitenwandbereich 16 mit der radial inneren konischen Felgenhornseite 25 und mit der korrespondierend ausgebildeten konischen äußeren Mantelfläche des Füllrings 12 auch im axialen Erstreckungsbereich des Felgenhorns in vollständigem Berührkontakt.

Der vollständige Formschluß des Wulstes zur Felge sichert den Sitz des Reifens auf der Felge während des Fahrens.

Im Bereich der Stirnfläche 26 des Horns 2 der Felge liegt die Reifenseitenwand jeweils lediglich unter Vorspannung an.

Bei Auflage eines Umfangselementes des Reifens auf die Straßenoberfläche wirken resultierende Normalkräfte F zwischen Fahrzeugluftreifen und Straßenoberfläche. Bei der Eindampfung dieser Kräfte wirkt auf die Seitenwände 9 des Reifens eine resultierende Kraft F_{A}, die im wesentlichen in axialer Richtung wirkt und die Seitenwand leicht weiter verkrümmt. Aufgrund der gewählten Vorspannung zwischen Stirnfläche 26 und Reifen liegt der Reifen in diesem Normallastfail unter Reduzierung der Vorspannung immer noch an der Stirnfläche 26 an. Bei Kurvenfahrten wird im Bereich der besonders stark belasteten Kurvenaußenseite aufgrund der eingeleiteten Kräfte die Vorspannung zwischen Stirnfläche 26 und Reifenseitenwand erhöht. Der Fahrzeugluftreifen 3 wird somit an der besonders stark belasteten Seite durch das Horn versteift. Ein sicheres Handling ist gewährleistet.

Bei starken Stoßwirkungen auf den Reifen wirken stärkere resultierende Kräfte F_{A} auf die Reifenseitenwände. Diese beulen weiter nach axial außen bei der Eindämpfung aus. Der für die flexible Krümmung der Seitenwand hierzu zur Verfügung stehende Seitenwandbereich reicht dabei vom Schulterbereich des Laufstreifens bis über den gesamten gekrümmten Bereich der Stirnfläche 26. Bei starken Stößen hebt die Reifenseitenwand 9 im Bereich der Stirnfläche 26 unter Bildung eines Spaltes zwischen Stirnfläche 26 und Reifenseitenwand ab.

Auch besonders starke auf den Reifen einwirkende Stöße können aufgrund des großen Krummungsradius R und der sehr langen für die Krümmung zur Verfügung stehenden Bogenlänge der Reifenseitenwand zwischen Reifenschulter und zylindrischer Felgenoberfläche unter geringer Flächenbeanspruchung der gekrümmten Seitenwandoberflächen sicher eingedämpft werden.

Der Notlaufstützkörper 11 erstreckt sich über den gesamten Umfangsbereich des Reifens. Bei plötzlichem Innendruckverlust stützt sich der Reifen mit seinem Laufstreifenbereich auf den beiderseitig vorgesehenen, mit im wesentlichen zylindrischer oder - wie dargestellt - mit gekrümmter oder nach axial innen mit leicht konisch erweiterter Oberfläche mit einem Steigungswinkel von 0 bis 10 ° zur Achsrichtung ausgebildeten Notlauffläche 14 ab. Frühzeitige Zerstörung und Ablösung des Reifens werden vermieden.

Ebenso ist es denkbar, die radial äußere Oberfläche der Notlaufstützflächen mit zusätzlichem Stützmaterial zu belegen. Das zusätzliche Stützmaterial ist aus hartem Kunststoff, Gummi oder Kunststoffschaum ausgebildet, das zur Dämpfung unempfindlich gegen Stöße ist und das gute Gleiteigenschaften für den Notlauf aufweist.

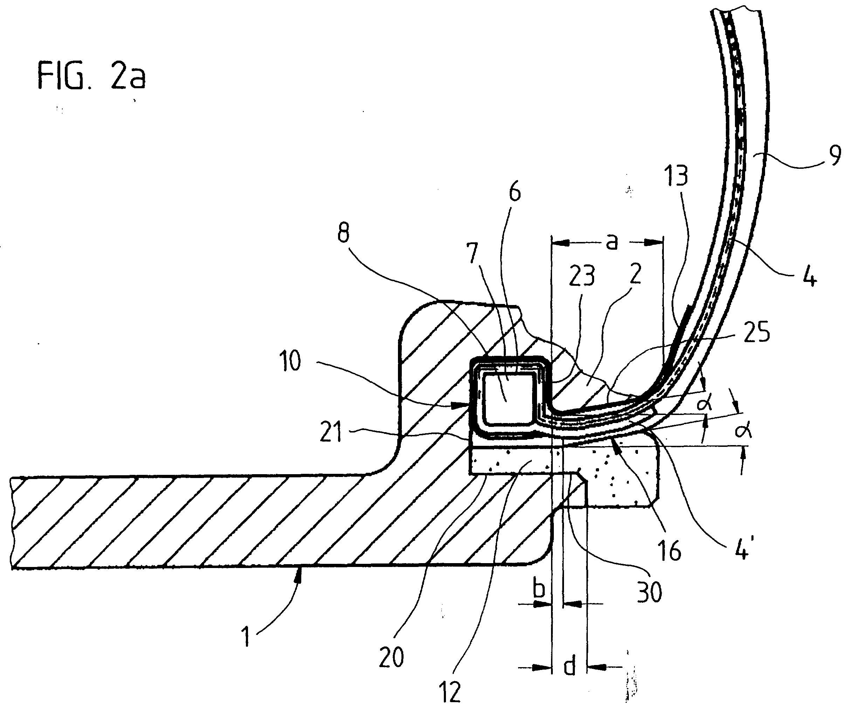

Fig. 2a zeigt eine vergrößerte Detaildarstellung des äußeren Randbereichs der Felge von Fig.1. In Fig.2a ist erkennbar, daß sich die Innenseite 25 des Felgenhorns von der Ringkammerwand 23 ausgehend unter Einschluß eines Winkels α zur Radachse nach axial außen hin bis zur gekrümmten Stirnfläche 26 des Felgenhorns 2 konisch erweitert. Die radial äußere Mantelfläche des Füllrings 12 ist von der Ringkammerwand 21 ausgehend über den gesamten axialen Erstreckungsbereich der Ringkammer hinweg bis zur Ringkammerwand 23 und in axialer Verlängerung aus der Ringkammer bis zu einem axialen Abstand b zur Ringkammerwand 23 zylindrisch ausgebildet. Ausgehend von einer Kreislinie im Abstand b zur Ringkammerwand 23 ist die radial äußere Mantelfläche des Füllrings 12 in axialer Richtung nach außen parallel zur Innenseite 25 des Felgenhorns ebenfalls unter Einschluß des Winkels α zur Radachse nach axial außen hin konisch erweitert ausgebildet. Der Füllring erstreckt sich ebenso wie das Felgenhorn noch über einen Abstand a von der Ringkammerwand 23 axial nach außen. Der Füllring 12 ist axial verschiebbar auf einer zylindrischen Lagerfläche 30 der Felge gelagert. Im Innern der Ringkammer bildet die Lagerfläche 30 die radial Innere Ringkammerwand 20. Nach axial außen erstreckt sich die Lagerfläche 30 bis in einen Abstand d von der Ringkammerwand 23. Axial außerhalb des Abstandes d ist der Füllring nach radial innen zu einer Schulter verdickt ausgebildet und liegt mit dieser an einer korrespondierend ausgebildeten Schulter der Felge an. Die Abstände a,b,d sind so gewählt, daß a größer als d und d größer als b ist. Der Winkel α liegt zwischen 2 und 20°. Im gezeichneten Ausführungsbeispiel liegt er bei ca. 10°. Auf diese Weise umschließen der Wulst mit seiner Verdickung 7 und der sich anschließende untere Seitenwandbereich 16 zwischen innerer Felgenhornfläche 25 und Füllring das Felgenhorn ,zwangsgeführt wodurch die Verankerung des Reifens in der Felge zusätzlich gesichert wird.

Der Füllring ist aus Gummi oder aus einem elastischen Kunststoff mit selbsthemmender Oberfläche ausgebildet. Es ist auch denkbar, den Füllring aus einem nichtelastischen Kunststoff oder Metall herzustellen. Soweit im Einzelfall erforderlich, ist es auch möglich, den Füllring im montierten Zustand mit seiner Schulter an der korrespondierenden Schulter der Felge beispielsweise durch Verschraubung zusätzlich axial zu fixieren.

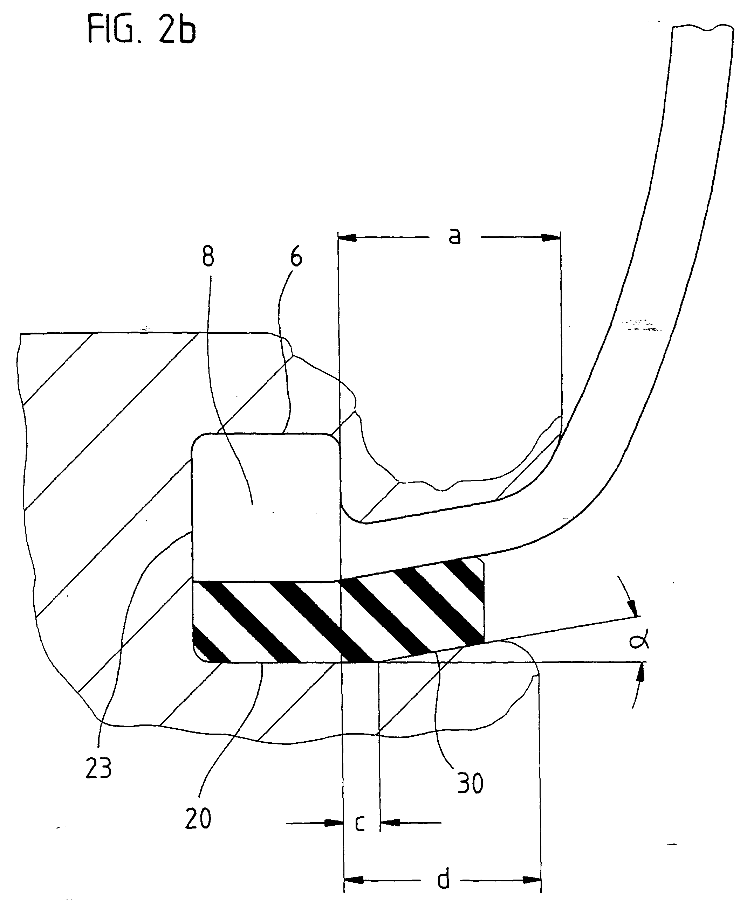

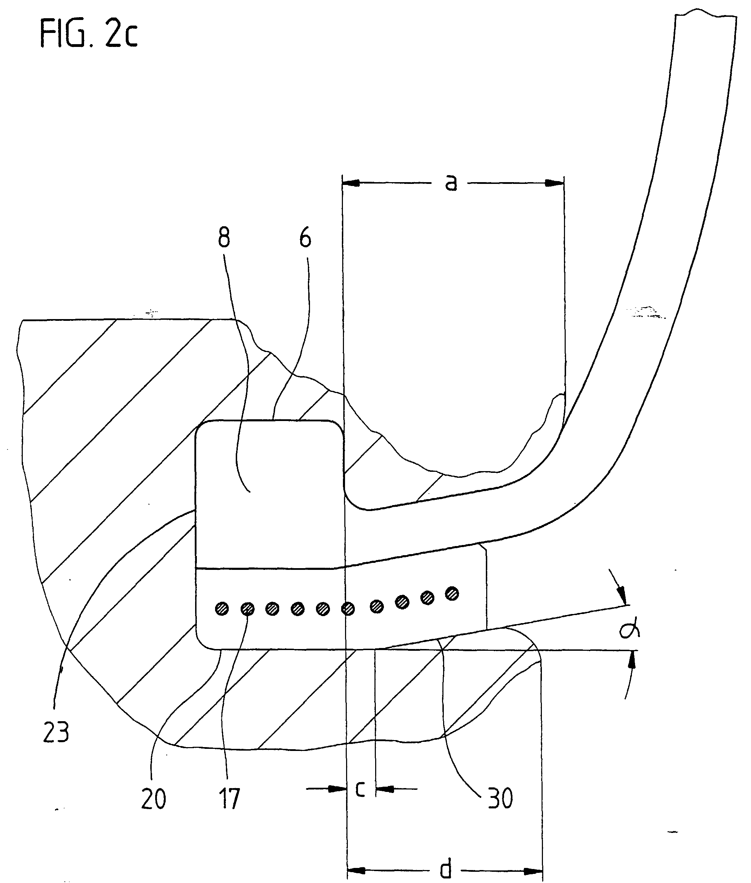

In den Fig.2b und 2c sind alternative Ausführungen des Füllrings 12 dargestellt. Die Lagerfläche 30 erstreckt sich axial bis zu einem Abstand c, der kleiner oder gleich dem Abstand a ist, von der Ringkammerseitenwand 23 nach außen. Die radial äußere Mantelfläche des Füllrings ist ab der axialen Position der Ringkammerseitenwand 23 ebenfalls konisch unter dem Steigungswinkel α verlaufend ausgebildet. Die radial Innere Mantelfläche des Füllrings ist ebenso wie die korrespondierend ausgebildete Lagerfläche 30 ab einer axialen Position im Abstand c von der Ringkammerseitenwand nach axial außen ebenso unter dem Winkel α zur Radachse konisch erweitert ausgebildet. Der Abstand c ist kleiner a. Durch diese konische Ausbildung wird der elastische Füllring in seiner montierten Position zusätzlich durch axialen Formschluß gesichert.

In Fig2c ist ein Füllring wie in Fig2b dargestellt, der jedoch im elastischen Gummi- oder Kunststoffmaterial eingebettete im wesentlichen in Umfangsrichtung verlaufende Festigkeitsträger 17 enthält. Die Festigkeitsträger geben dem Füllring zusätzlichen Haft auf der Lagerfläche 30. Die Festigkeitsträger 17 können mehrere nebeneinander angeordnete in Umfangsrichtung gewickelte zugfeste Festigkeitsträger sein. In einer anderen Ausführung ist ein oder mehrere nebeneinander angeordnete Festigkeitsträger kontinuierlich wendelförmig um die Achse des Füllrings von einem axialen Ende zum anderen axialen Ende des Füllrings gewickelt. Die Abstände zwischen den benachbarten Wicklungen sind äquidistant. Soweit zur Erzielung einer noch sichereren Fixierung des Füllrings auf der Lagerfläche 30 sinnvoll, können die Abstände auch unterschiedlich gewählt sein. Die Festigkeitsträger sind Monofilamente oder Multifilamente aus Stahl. In einer anderen Ausführung sind die Festigkeitsträger textile Monofilamente oder Multifilamente. Es ist auch denkbar die Festigkeitsträger 17 aus Gewebestreifen auszubilden. Die Verstärkung des Füllrings 12 durch Festigkeitsträger in der beschriebenen Art ist auch beim Ausführungsbeispiel von Fig.2a möglich.

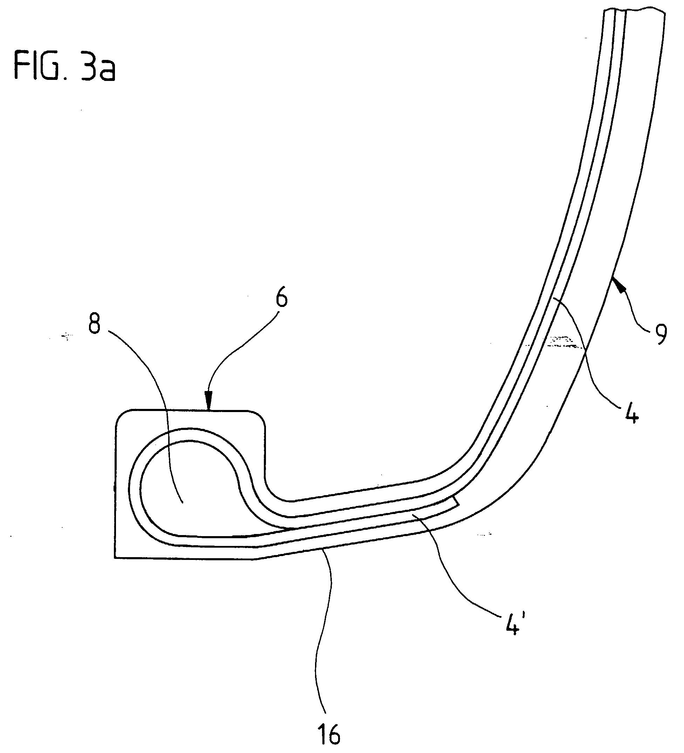

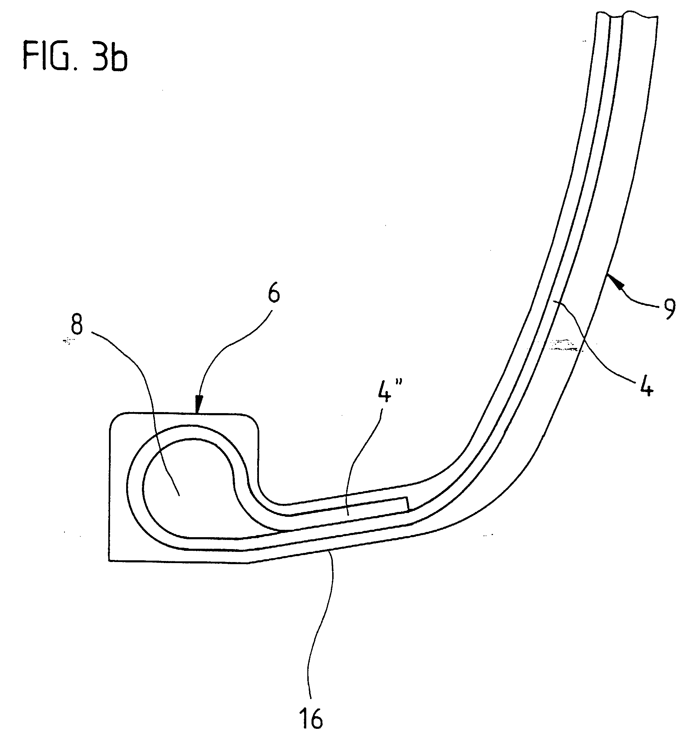

Der Wulstkern 8 wird, wie in den Fig.1,2 und 3a dargestellt ist, durch Einbettung des Kerns 8 in die Karkasse 4 durch Umschlag der Karkasse 4 um den Kern von innen nach außen oder, wie im Ausführungsbeispiel von Fig. 3b dargestellt ist, von außen nach innen verankert. Die Karkasse 4 ist eng um den Kern 8 gewickelt und der Umschlag 4' ist ebenso wie im anderen Ausführungsbeispiel der Umschlag 4" im Anschluß an den Kern 8 in unmittelbarem Kontakt zum Hauptteil der Karkasse. Der Kern 8 ist tröpfchenförmig zum Berührungspunkt zwischen Umschlag und Hauptteil der Karkasse verjüngt ausgebildet. Zur Ausbildung des Kerns 8 wird ein elastisches Gummimaterial mit einer Shore-A-Härte von 80 bis 100, vorzugsweise 85 bis 90 - im Ausführungsbeispiel von Figur 1 mit einer Shore-A-Härte von 87 - gewählt, das eine elastische Dehnbarkeit in Umfangsrichtung des Kerns von 5 bis 30%, für Standard-Reifendimensionen von 10 bis 20%, und eine elastische Stauchbarkeit von 1 bis 5%, für Standard-Reifendimensionen von 2,5 bis 3,5 Prozent, aufweist.

Der Kern wird durch Extrusion durch injection moulding oder vergleichsweise bekannte Techniken hergestellt.

Es ist auch denkbar, den Wulst kernlos auszubilden, wobei auch in diesem nichtdargestellten Ausführungsbeispiel das Gummimaterial des Wulstes so gewählt wird, daß der Wulst die genannten Dehnungs- und Stauchungseigenschaften in Umfangsrichtung aufweist.

Soweit der Abrieb zwischen Felgenhorn und unterer Seitenwand unerwünscht groß wird, ist es möglich, wie in Figur 1 und 2a beispielhaft dargestellt, zusätzlich zwischen Felgenhorn und Wulst einen zusätzlichen Streifen 13 von abriebfestem Material, beispielsweise von abriebfestem Gummi oder Kunststoff auszubilden. Der abriebfeste Streifen kann bis in die Ringkammer reichen und dort um den Wulst umgeschlagen sein.

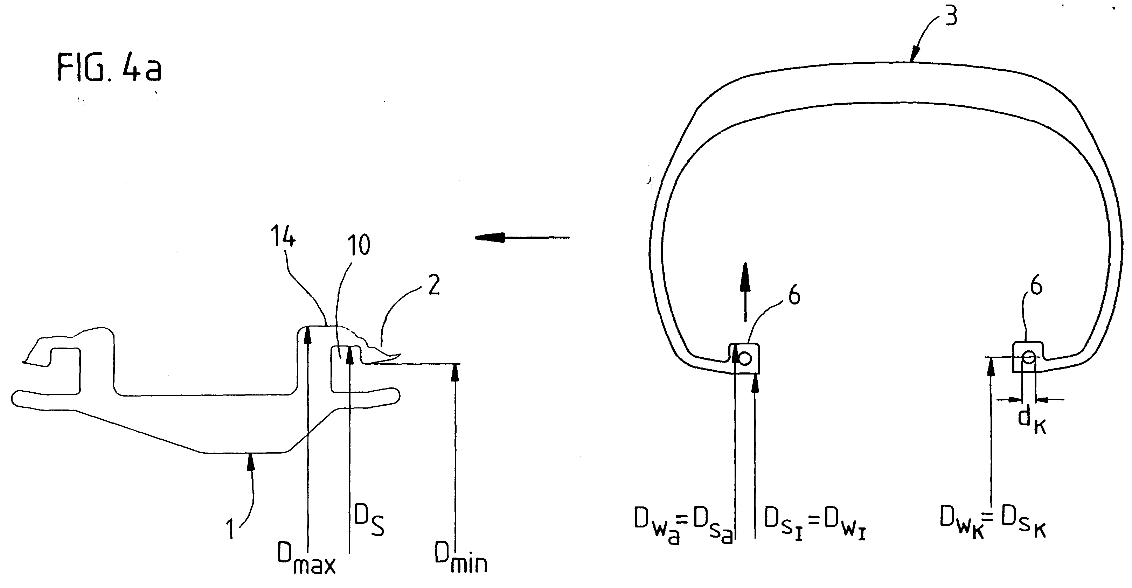

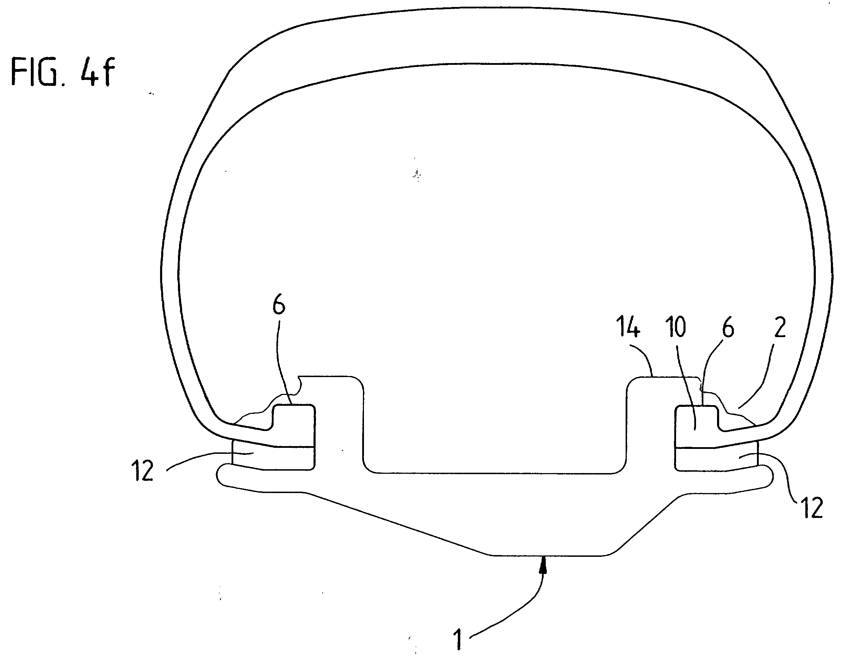

Anhand der schematischen Darstellungen der Figuren 4a bis 4e wird im Folgenden die Montage des Reifens auf einer Felge beschrieben. Die Notlaufstützflächen 14 weisen einen maximalen Außendurchmesser Dmax, die beiden Felgenhörner einen minimalen Innendurchmesser Dmin auf. Der Reifenwulst ist in Fig.4a im ungedehnten und ungestauchten Zustand. Sein Außendurchmesser Dwa entspricht dem Durchmesser der radial äußeren Ringkammerwand 22 und somit dem äußeren Durchmesser des Wulstes Dsa in dessen Sitzposition in der Ringkammer. Sein Innendurchmesser Dwi entspricht dem Durchmesser der radial äußeren Mantelfläche des Füllrings 12 in der Ringkammer und somit dem inneren Durchmesser des Wulstes Dsi in dessen Sitzposition in der Ringkammer. Der Kern mit einer Dicke d, beispielsweise ist d= 10mm, in radialer Richtung hat in der radialen Position der halben radialen Dicke einen mittleren Kerndurchmesser Dwk durch die Reifenachse, der dem mittleren Kerndurchmesser Dsk in der Sitzposition des Wulstes in der Ringkammer entspricht. Dmax ist größer als Dsa, Dsa ist größer als Dsk, Dsk ist größer als Dmin, Dmin ist größer als Dsi.

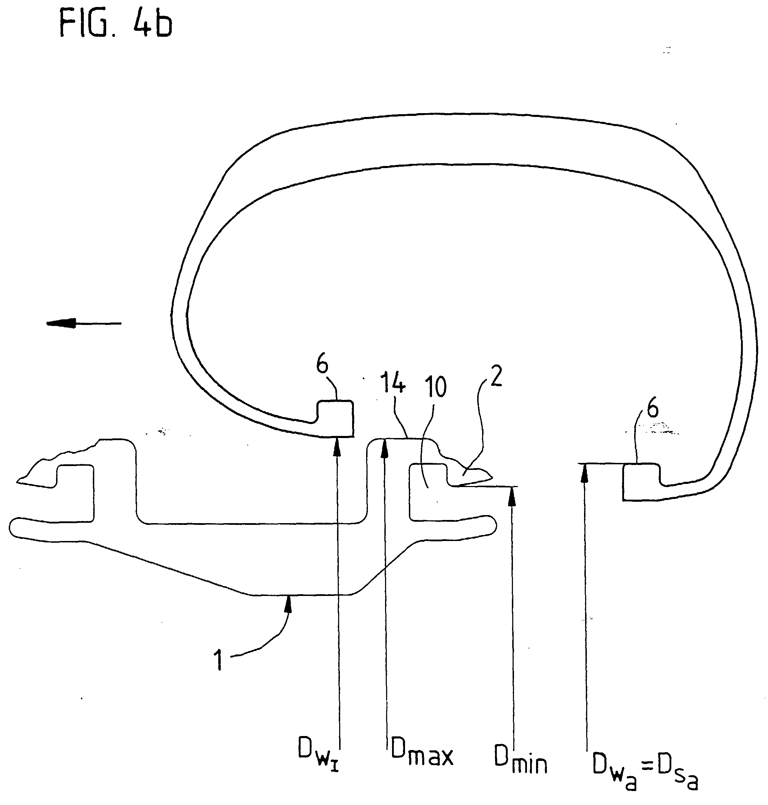

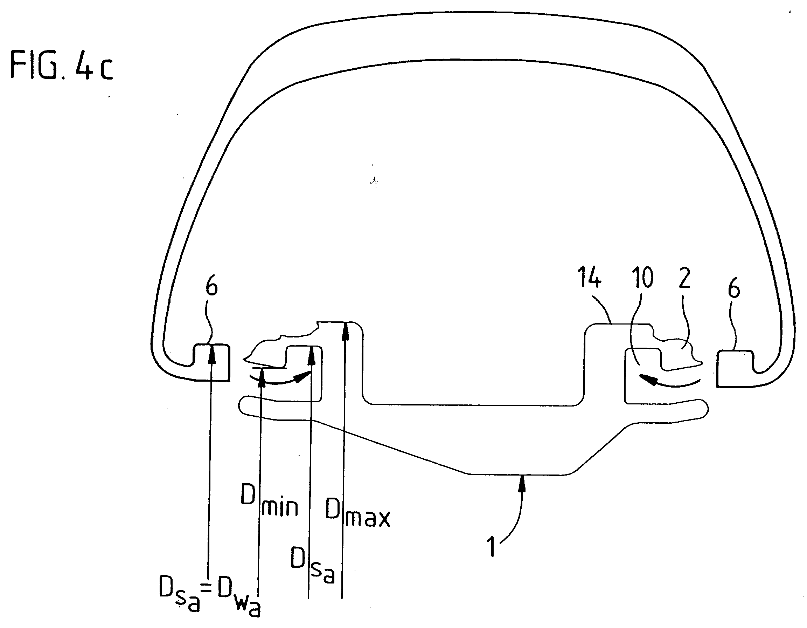

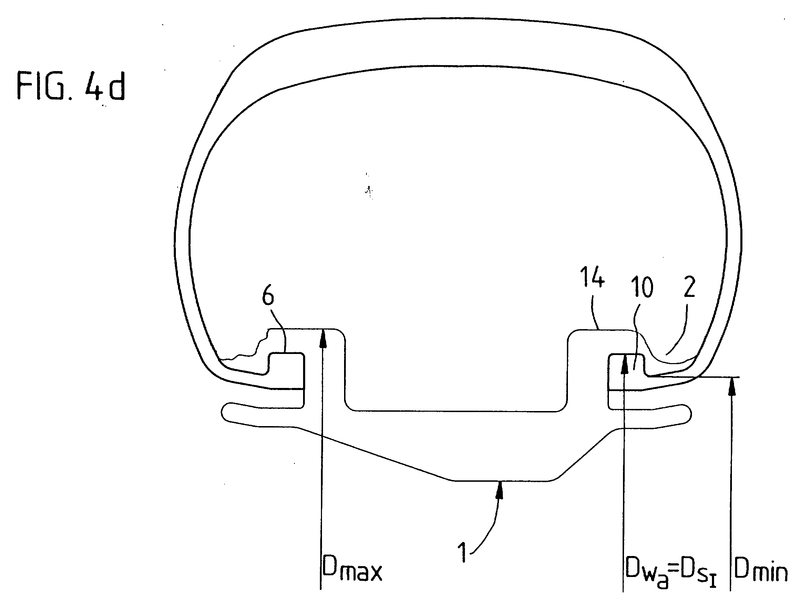

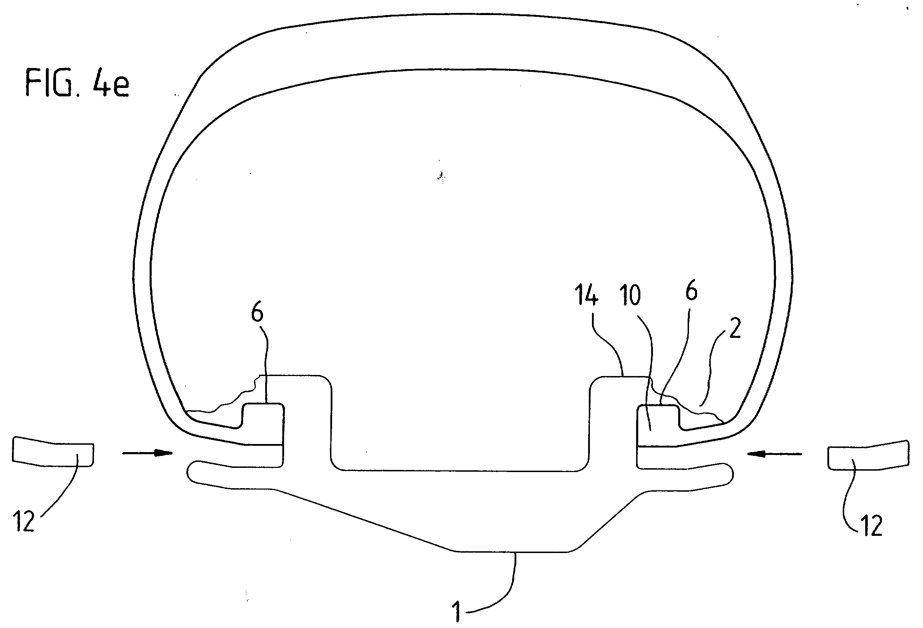

Zur Montage wird zunächst der Notlaufstützkörper 11 mit seinen ringförmigen Stützelementen konzentrisch in seiner Sitzposition auf der Felge montiert. Danach wird der Reifen 3 konzentrisch zur Felge an die Felge in den Figuren von rechts axial herangeführt. Der linke Wulst wird entgegen der elastischen Rückstellkräfte des Wulstes in Umfangsrichtung soweit gedehnt, daß der Innendurchmesser Dwi des Wulstes größer als der maximale Außendurchmesser Dmax der Notlaufstützflächen ist. Danach wird, wie in Figur 4b dargestellt ist , der Reifen 3 weiter konzentrisch zur Felge axial zur Felge hinbewegt, wobei der linke Wulst unter Beibehaltung seines gedehnten Zustandes mit Spiel zu den Notlaufstützflächen 14 axial über die Felge und den Stützkörper geschoben wird. Sobald der linke Wulst eine Position auf der linken Seite axial außerhalb des linken Felgenhorns erreicht hat wird der Wulst unter Ausnutzung der elastischen Rückstellkräfte wieder in seiner Umfangslänge soweit zurückgestellt, daß er wieder den ungedehnten und ungestauchten Zustand einnimmt. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Wie durch die Pfeildarstellung von Fig 4c dargestellt, werden beide Wülste nun entgegen der elastischen Rückstellkräfte in ihrer Umfangslänge soweit gestaucht, daß der Außendurchmesser Dwa des Wulstes kleiner als der minimale Felgenhorndurchmesser Dmin ist.In diesem Zustand werden die Wülste mit Spiel zum Felgenhorn axial in die jeweilige Ringkammer eingeführt. Unter Ausnutzung der elastischen Rückstellkräfte werden die Wülste wieder in ihrer Umfangslänge soweit zurückgestellt, daß sie wieder den ungedehnten und ungestauchten Zustand einnehmen. In diesem Zustand entspricht Dwi wieder Dsi, Dwa wieder Dsa und Dwk entspricht ebenfalls wieder dem mittleren Durchmesser Dsk des Kerns in dessen Sitzposition in der Ringkammer. Die Wülste sitzen ungedehnt und ungestaucht in der Ringkammer. Dieser Zustand ist in Fig.4d dargestellt. Wie in Fig4e dargestellt ist, wird nun jeweils ein Füllring 12 von axial außen zwischen unterem Seitenwandbereich 16 des Reifens und Lagerfläche 30 axial soweit eingeführt, daß die Ringkammer vollständig von Wulst und Füllring ausgefüllt ist. Der vollständige Formschluß zwischen einstückiger Ringkammer und Wulst ist hergestellt.

Zur Demontage wird entsprechend zunächst der Füllring axial nach außen entfernt. Danach werden die Wülste soweit gestaucht, daß sie mit Spiel zum Felgenhorn aus der Ringkammer gezogen werden können. Nach der Rückstellung der Umfangslänge wird ein Wulst soweit gedehnt, daß er mit Spiel zu den Notlaufstützflächen axial von der Felge gezogen werden kann.

Danach kann - soweit es wünschenswert erscheint - der Notlaufstützkörper entfernt und/oder gegen einen anderen ausgetauscht werden.

Es ist auch denkbar, den Reifen zur Montage anstatt ihn axial zu verschieben, zunächst um 90 ° zu drehen und dann zu dehnen und im gedehnten Zustand in radialer Richtung auf die Felge zu schieben, um ihn dort wieder um 90 ° zurückzudrehen, so daß sich die beiden Wülste jeweils axial außerhalb der Felge befinden. Die weitere Montage erfolgt wie oben beschrieben.

Im einem Ausführungsbeispiel ist der Durchmesser Dmax beispielsweise um das 1,2-fache größer als der Innendurchmesser Dsi des Wulstes in der Sitzposition in der Ringkammer und der minimale Felgenhorndurchmesser ist um den Faktor 1,025 kleiner als der Außendurchmesser Dsa des Wulstes in der Sitzposition in der Ringkammer. Als Gummimaterial des Wulstes wird ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Beispielsweise wird ein bekanntes Gummimaterial verwendet, das eine Umfangsdehnung des Wulstes um 25% und eine Umfangsstauchung um 2,7% ermöglichen.

Die Notlaufstützflächen können auch mit einem größeren oder kleineren maximalen Außendurchmesser Dmax entsprechend den individuell einzustellenden Notlaufeigenschaften eines Reifens ausgebildet sein. Der maximale Durchmesser Dmax der Notlaufstützflächen ist dabei bei Standardreifen optimalerweise um einen Faktor1,1 bis 1,2 größer als der Innenringdurchmesser Dsi des Wulstkerns im montierten Zustand des Fahrzeugrades. Er kann in Spezialfällen jedoch auch um einen Faktor zwischen 1,05 und 1,3 größer sein als der Innenringdurchmesser Dsi des Wulstkerns im montierten Zustand des Fahrzeugrades. Als Gummimaterial des Wulstes wird hierfür jeweils ein Gummimaterial mit einer Dehnungsfähigkeit und mit einer Stauchbarkeit gewählt, die ein solches Dehnen und Stauchen des Wulstes in Umfangsrichtung erlauben, daß der Wulst über die Notlaufstützfläche 14 und in die Ringkammer mit Spiel axial bewegt werden können. Dementsprechend wird der Wulst, der im montierten Zustand des Fahrzeugrades ungedehnt und ungestaucht ist, derart ausgebildet, daß er eine Dehnbarkeit zwischen 10 und 20 % und eine Stauchbarkeit von 2,5 bis 3,5 % bei Standardreifen und in den Spezialfällen eine Dehnbarkeit zwischen 5 und 30 % und eine Stauchbarkeit zwischen aufweist 1 bis 5% aufweist.

Es ist auch denkbar nach Einführen des Wulstes in die Ringkammer einen Füllring durch Einpritzen von aushärtbarem Kunststoffmaterial von axial außen durch die Öffnung der Ringkammer einzubringen.

Es ist auch denkbar, den Notlaufstützkörper mit einer Notlauffläche auszubilden, die sich über den gesamten axialen Mittenbereich der Felge erstreckt. Diese kann beispielsweise über die gesamte axiale Gürtelbreite des Reifens ausgebildet sein.

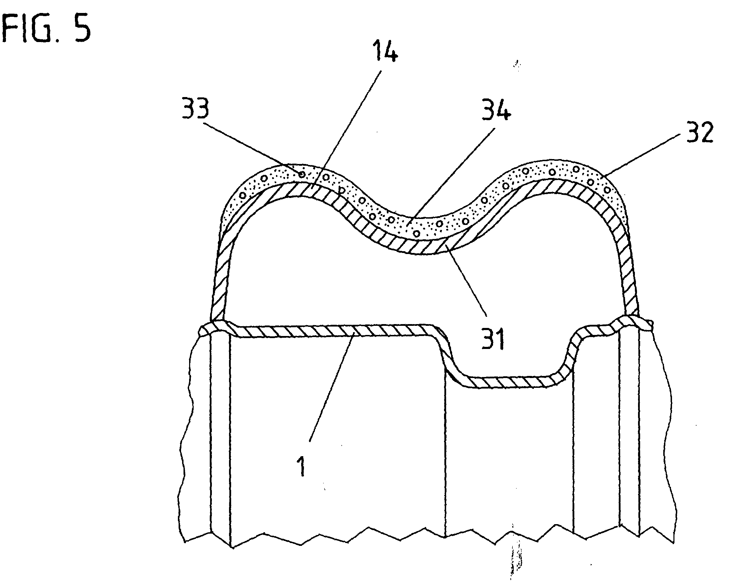

Figur 5 zeigt eine weitere Ausführung eines Fahrzeugrades, welches im wesentlichen wie das Fahrzeugrad von Figur 1 ausgebildet ist. Das Fahrzeugrad ist aus der einteiligen Felge 1, dem Reifen 3 sowie einem mit einer Beschichtung 32 versehenen Notlaufstützkörper 31 ausgebildet.

Der Notlaufstützkörper 31 ist schalenförmig ausgeführt und weist in der dargestellten Ausführung mehrere Krümmungen auf, die die obenliegende Notlauffläche 14 des Notlaufstützkörpers in zwei Schulterbereiche und einen mehr oder weniger stark ausgeprägten Rücksprungbereich aufteilen und dadurch ein besonders gutes Laufverhalten im Notlauf gewährleisten.

Die auf der Notlauffläche des Notlaufstützkörpers 31 befindliche Beschichtung 32 besteht dabei aus einer Suspension, die aus einer Bingham'schen Flüssigkeit 34 und darin eingelagerten Festkörpern 33 besteht. Die Bingham'sche Flüssigkeit in der Suspension ist von ihrem Fließverhalten so eingestellt, dass bei normalen Reifeninnendruckverhältnissen eine hohe Zähigkeit vorhanden ist und erst bei mechanischen Druckbelastungen, durch z.B. bei im Notlauf erfolgender Anlage der Innenseite des Reifens an den Notlaufstützkörper, fließfähig wird.

Der Notlaufstützkörper ist in der in Fig. 5 dargestellten Ausführung mit radial nach innen gerichteten Stützflächen ausgebildet, mit denen er sich auf der Felge abstützt. In einer anderen nicht dargestellten Ausführung ist sie - wie anhand der Fig.1 - dargestellt, mit zusätzlichen ringförmigen Stützelementen ausgebildet, über die sich der Notlaufstützkörper auf der Felge abstützt.

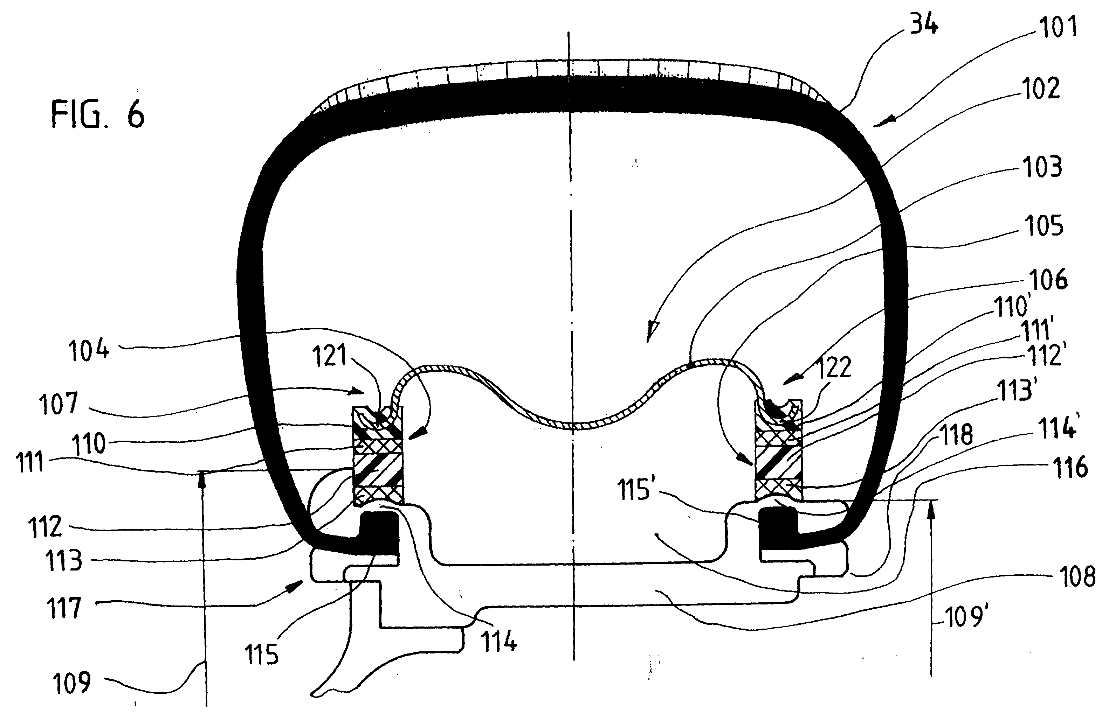

Die Figur 6 zeigt ein Fahrzeugrad 101, welches mit einem Notlaufstützkörper 102 versehen ist, der im wesentlichen besteht aus dem schalenförmigen Ringkörper 103 innerhalb des Luftreifens und den Stützelementen 104 und 105 für die beiden axial äußeren Wandungsbereiche 106 und 107 des Ringkörpers 103. Ebenfalls erkennt man eine Tiefbettfelge 108 mit einem Felgenhorndurchmesser 109 auf der linken Seite. Auf der rechten Seite sind die Felge und das Felgenhorn radial außen ineinanderübergehend im wesentlichen zylindrisch mit einem gegenüber dem Felgenhorndurchmesser 109 kleineren Felgenhorndurchmesser 109' ausgebildet.

Die axial äußeren Wandungsbereiche 106 und 107 des schalenförmigen Ringkörpers 103 sind dabei mit den zugehörigen ringförmigen Stützelementen 104 und 105 formschlüssig verbunden.

Die Stützelemente 104 und 105 sind hierbei als Verbundkörper ausgebildet, die über ihre radiale Höhe aus mehreren miteinander verbundenen Materialschichten unterschiedlicher Elastizität 110, 111, 112, 113 bzw. 110', 111', 112' und 113' bestehen.

Die beiden radial oberen Materialschichten 110 und 110' sind hierbei aus einem Kunststoffmaterial hergestellt, das eine wesentliche niedrigere Elastizität aufweist, als die anschließenden radial unteren Materialschichten 111 bis 113 bzw. 111' bis 113'. Die Verbundkörper 104 und 105 beinhalten weiterhin ein aus den drei Materialschichten 111, 112, 113 bzw. 111', 112', 113' bestehendes Verbundpaket, deren radial obere Materialschichten 111 und 111' und deren radial untere Materialschichten 113 und 113' eine höhere Elastizität aufweisen als die zwischenliegenden Materialschichten 112 bzw. 112'.

Die Materialschichten 111 und 111' sowie 113 und 113' bestehen hierbei aus einer Gummimischung, während die Materialschichten 112 und 112' aus einem Kunststoffmaterial bestehen, welches eine höhere Elastizität aufweist, als das Kunststoffmaterial der oben liegenden Schichten 110 und 110',

Die unteren Materialschichten 113 und 113' liegen auf der Felge auf, werden beispielsweise durch eine Art Felgenhump 114 und 114' zusätzlich fixiert. Die Materialschicht 113 stützt sich an der linken Außenseite am Felgenhorn ab, die Materialschicht 113' stützt an der rechten Reifenseite den unteren Reifenseitenwandbereich in axiale Richtung.

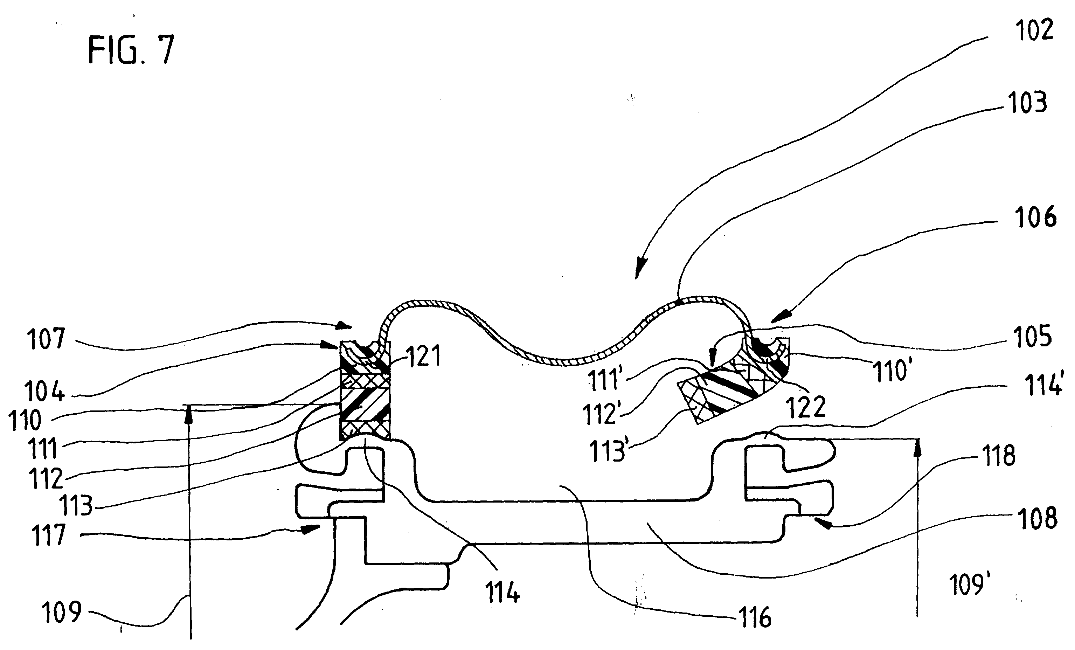

Die Figur 7 zeigt einen Zwischenschritt während der Montage eines Notlaufstützkörpers für ein erfindungsgemäßes Fahrzeugrad gemäß Figur 6. Hierbei beinhaltet die Montage, daß zunächst der Notlaufstützkörper in seine Position eingebracht wird und das Stützelement 104 in seine durch den Felgenhump 114 gestützte Position in Anlage an das Felgenhorn eingeschoben wird. Der nächste Schritt besteht dann darin , daß das zweite Stützelement 105unter Verformung auf die Felgenschulter 118' gehoben wird, wonach auch das Stützelement 105 in seine durch den Felgenhump 114' abgestützte Position rückfedert.

Bei dem hier eingesetzten Ringkörper 103 handelt es sich um einen geschlitzten Ringkörper mit einem im wesentlichen in axialer Richtung verlaufenden Öffnungsschlitz 119, der zum Aufbringen durch scheibenförmiges Ausfedern des geschlitzten Ringes auf einen vergrößerten Montagedurchmessers gebracht wird und nach Einbau die hier dargestellte felgennahe Position einnimmt.

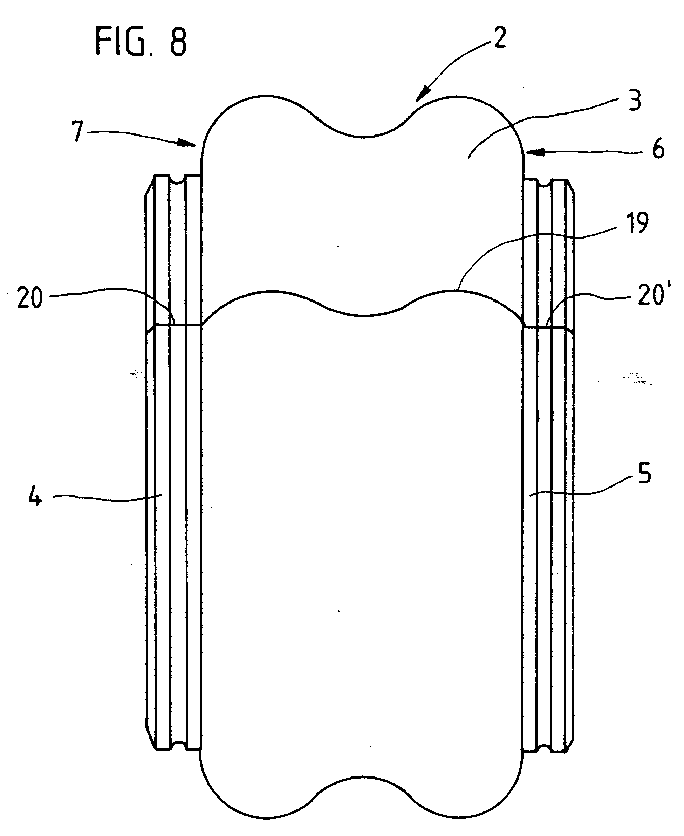

Die Figur 8 zeigt einen solchen Notlaufstützkörper mit dem im wesentlichen in axialer Richtung verlaufenden Öffnungsschlitz 119 in der Ansicht, wobei der Öffnungsschlitz auch leicht schräg, bogen- oder pfeilförmig angeordnet sein kann. Ebenfalls erkennbar sind in der Figur 8 die Trennfugen 120 und 120' der als abgelängtes Strangprofil ausgebildeten Stützelemente 104 und 105.

Die axial äußeren Wandungsbereiche 106 und 107 des Ringkörpers 103 sind hierbei mit gewölbten Profilpositiven 121 und 122 versehen, auf die die Stützelemente 104 und 105 mit ihren komplementären zur Aufnahme des Profilpositivs geeigneten Profilnegativen 123 und 124 nach Öffnung des geschlitzten Ringes aufgeschoben werden.

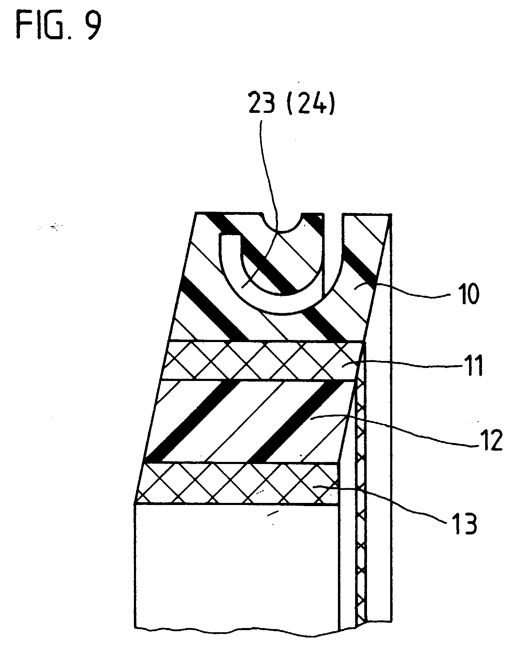

Die Figur 9 zeigt beispielhaft eines der Stützelemente im Teilschnitt mit den Materialschichten 110, 111, 112 und 113 sowie dem Profilnegativ 123 (linksseitig) (124 rechtsseitg). Mit dem hier dargestellten abgelängten Strangprofil können durch spiegelbildliches Anordnen beide Stützelemente bereitgestellt werden.

Die Verbindung zwischen den axial äußeren Wandungsbereichen des Ringkörpers und der radial oberen Materialschicht des Verbundkörpers kann hierbei zusätzlich verklebt werden, wobei die Gestaltung der Profilpositive und -negative sich dann vereinfachen läßt und etwa lediglich in Form einer Abwinklung der axial äußeren Wandungsbereiche des Ringkörpers und einer entsprechenden Aufnahme in der oberen Materialschicht gestaltet werden können.

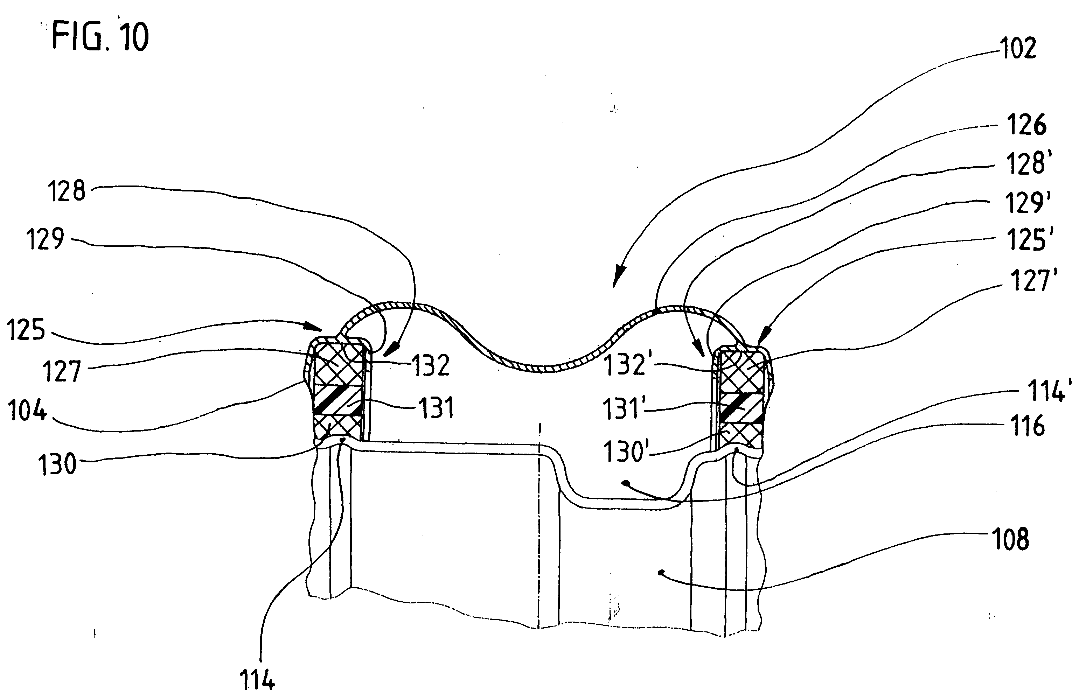

Die Figur 10 zeigt ein Fahrzeugrad mit einem Notlaufstützkörper 102, bei dem die äußeren Wandungsbereiche 125 und 125' des Ringkörpers 126 mit einer die oberen Materialschichten 127 und 127' der als Verbundkörper ausgebildeten Stützelemente 128 und 128' teilweise umgebenden Aufnahmen 129 und 129' versehen ist.

Die radial oberen und durch die Aufnahmen 129 und 129' teilweise umgebenden Materialschichten 127 und 127' bestehen hierbei aus einer Gummimischung, ebenso wie die radial unteren und auf der Felge aufliegenden Materialschichten 130 und 130' der Verbundkörper. Die zwischen diesen Schichten liegenden Materialschichten 131 und 131' bestehen aus Kunststoff und weisen eine niedrigere Elastizität auf als die Materialschichten 127, 127', 130 und 130'.

Die oberen Materialschichten 127 und 127' der Verbundkörper sind hierbei durch eine Kaltvulkanisation im Verbindungsbereich 132 und 132' am Ringkörper 126 befestigt. Die Verbindung in diesem Bereich kann auch durch andere kraftschlüssige Verfahren, wie Kleben oder durch Formschluß, etwa durch komplementäre Profile oder durch Klemm- oder Rastverbindungen, erfolgen.

Während der Montage können die Stützelemente in ähnlicher Weise wie in der Figur 7 dargestellt verformt werden, so daß das Einbringen des Notlaufstützkörpers problemlos erfolgen kann. Im Notlauf, d. h. in dem Fall, in dem die Innenseite des Laufstreifenbereiches des luftleeren Reifens am Ringkörper 126 anliegt und dieser also lasttragend mit Radialkraft beaufschlagt wird, tauchen die oberen Materialschichten 127 und 127' (der Verbundkörper) zunehmend in die Aufnahmen 129 und 129' des Ringkörpers ein und werden schließlich vollständig von den Aufnahmen umschlossen und in diesem Verformungszustand in ihrer weiteren Federung völlig blockiert.

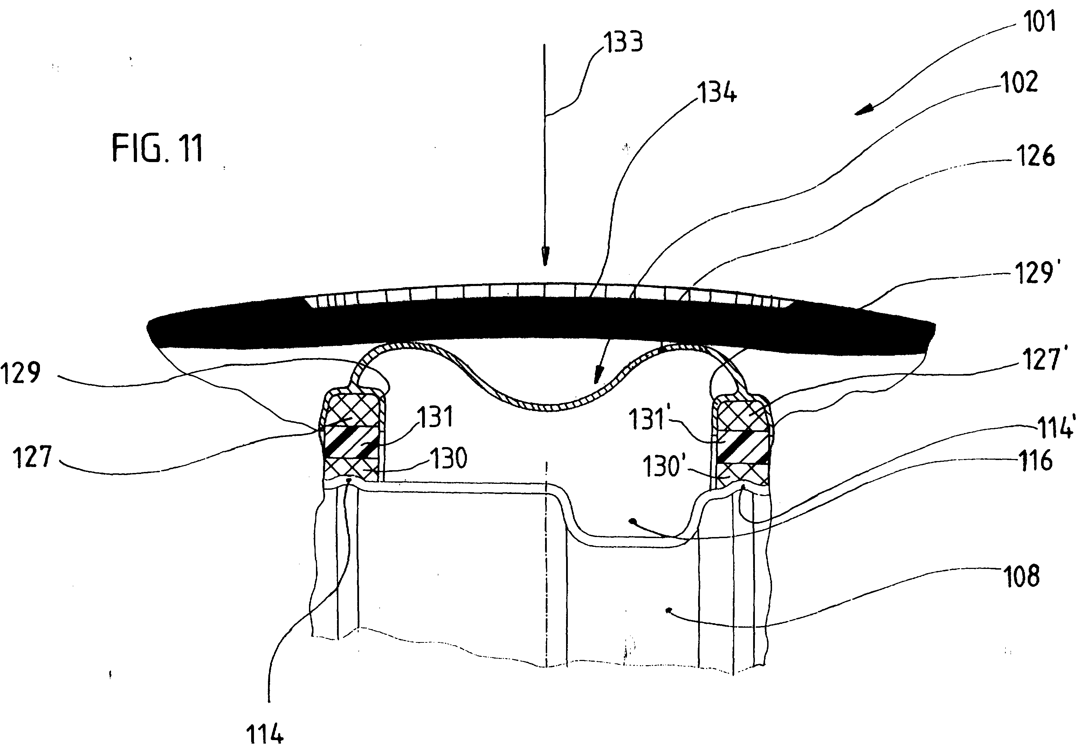

Verdeutlicht wird dies in der Figur 11, die das Stützelement unter einer Radialbelastung 133 im Notlauf zeigt. Deutlich erkennt man hier, daß die oberen Materialschichten 127 und 127' der Verbundkörper vollständig in die Aufnahmen 129 und 129' eingetaucht sind, wodurch diese Materialschichten bereits vollständig in ihrer Elastizität blockiert sind. Ebenfalls teilweise eintauchen in die Aufnahmen 129 und 129' können auch - je nach Elastizität - die mittleren Schichten 131 und 131' des Verbundkörpers, die damit ebenfalls teilweise in ihrer Elastizität blockiert werden. Es ergibt sich somit im oberen Bereich des Verbundkörpers eine starke Versteifung der Gesamtkonstruktion, wobei in Kombination mit der Kompressionsverformung der unteren Materialschichten ein extrem hoher Widerstand gegen Verformung in axialer Richtung aufgebaut wird

Auch wenn - wie in der Ausführung von Fig. 6 dargestellt - das Fahrzeugrad auf der linken und auf der rechten Seite unterschiedlich ausgebildet ist, ist es auch möglich, ein derartiges in den Fig. 6 bis 11 dargestelltes Fahrzeugrad in einer weiteren Ausführungsform auf beiden Seiten gleich auszubilden. Beispielsweise kann es auf beiden Seiten entweder - wie auf der linken Seite von Fig.6 dargestellt - zur axialen Anlage der Stützelemente am Felgenhorn mit größerem Felgenhorndurchmesser oder aber auch - wie auf der rechten Seite von Fig.6 dargestellt - zur einfacheren Montage mit einem kleineren Felgenhorndurchmesser ausgebildet sein.

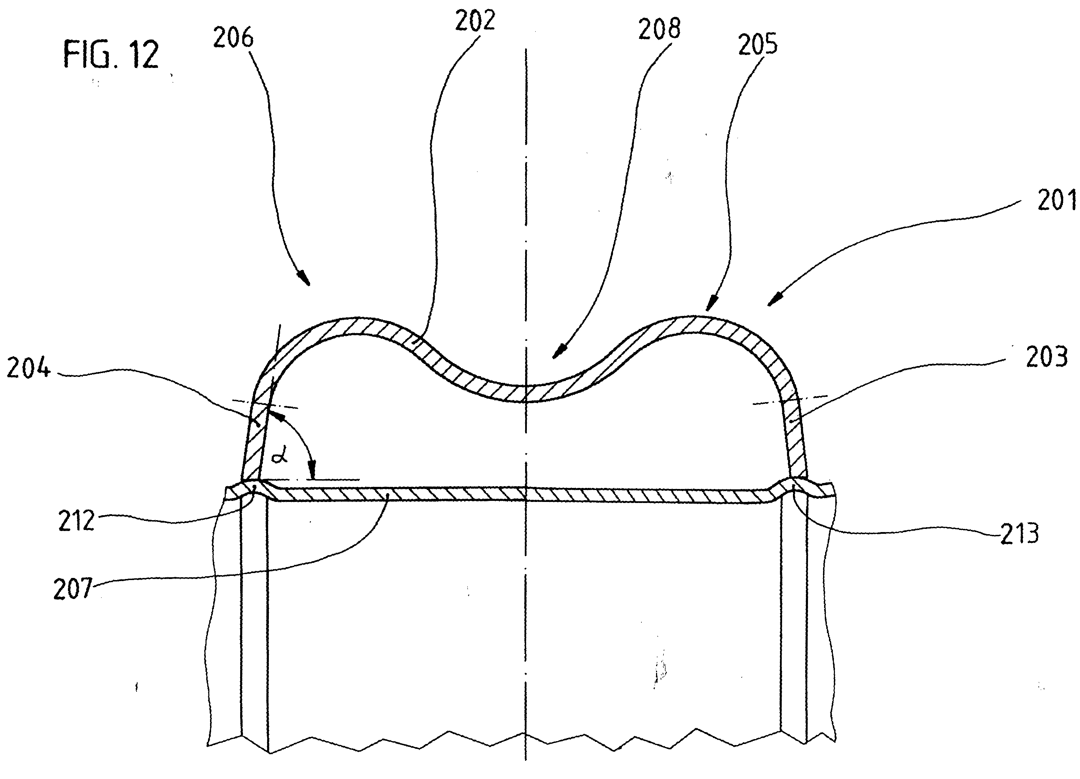

In der Figur 12 erkennt man einen Notlaufstützkörper 201, der aus einem im Querschnitt schalenförmigen Ringkörper 202 und den Stützelementen 203 und 204 besteht. Der Stützkörper 202 weist hierbei in seinen axial äußeren Bereichen 205 und 206 eine mit zur Felge 207 geöffneten ersten Krümmung versehene Kontur auf.

Zwischen diesen zur Felge 207 geöffneten Krümmungen befindet sich ein Bereich 208 mit einer mit zum Zenitbereich des Reifens geöffneten zweiten Krümmung versehenen Kontur.

Die Krümmungen der Bereiche 205, 206 und 208 weisen dabei ineinander gehende Krümmungsradien auf, wobei die Krümmungen der Bereiche 205 und 206 stufenlos in die Kontur der Stützelemente 203 und 204 übergehen. Diese Stützelemente sind als im wesentlichen ebene Kreisringscheiben ausgebildet und stützen sich auf der Felge 207 ab.

Die Kreisringscheiben sind hierbei um einen Winkel α von 83° zur Radachse geneigt, wobei die hier vorgegebene Neigung zur Reifenmitte hin gerichtet ist.

Die die Felgen 207 berührenden Flächen der Stützelemente 203 und 204 sind hierbei an die Form Sitzflächen auf der Felge - beispielsweise an Sicken 212 und 213 (Hump) - angepasst, wodurch sich eine sichere Positionierung insbesondere auch im Notlauf ergibt.

Der schalenförmige Ringkörper 202 ist bei dieser Ausführung in Bezug auf die Reifenbreite symmetrisch ausgebildet.

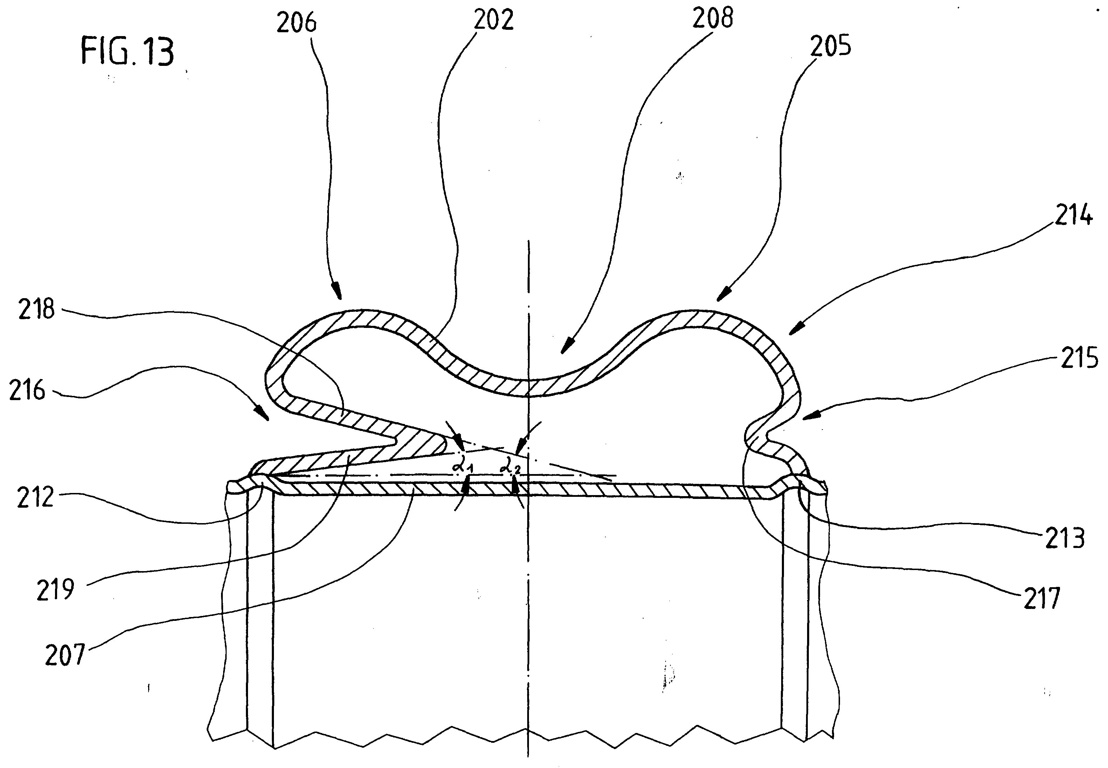

Die Figur 13 zeigt links und rechts der Mittellinie zwei Versionen eines Notlaufstützkörpers 214, bei dem der schalenförmige Ringkörper 202 durch die unterschiedlich ausgebildeten Stützelemente 215 und 216 auf der Felge 207 abgestützt wird.

Das Stützelement 215 besteht hierbei, wie in der Fig. 12 bereits gezeigt, aus einer als Verlängerung der axial äußeren Bereiche des schalenförmigen Ringkörpers ausgebildeten Kreisringscheibe, die jedoch eine Sicke 217 aufweist, und somit neben den materialelastischen Eigenschaften auch formelastisch wirkt.

Bei dem Stützelement 216 ist dieser formelastische Anteil wesentlich ausgeprägter, da dieses Stützelement aus zwei aneinander anschließenden Kreisringscheiben 218 und 219 besteht, die zur Fahrzeugachse die Neigungswinkel α1 und α2 zeigen. Die Wirkung einer solchen Ausbildung ähnelt dem Aufbau eines Tellerfederpaketes und stellt eine extrem hohe und vollständig reversible Elastitzität in dem Stützelement bereit.

Auch hier liegt das Stützelement auf der Felge 7 auf.

Natürlich können auch beide Stützelemente eines schalenförmigen Ringkörpers unterschiedlich ausgebildet werden, so dass z. B. bei einem stark schräggestellten Rad das innenliegende Stützelement eine Sicke aufweist.

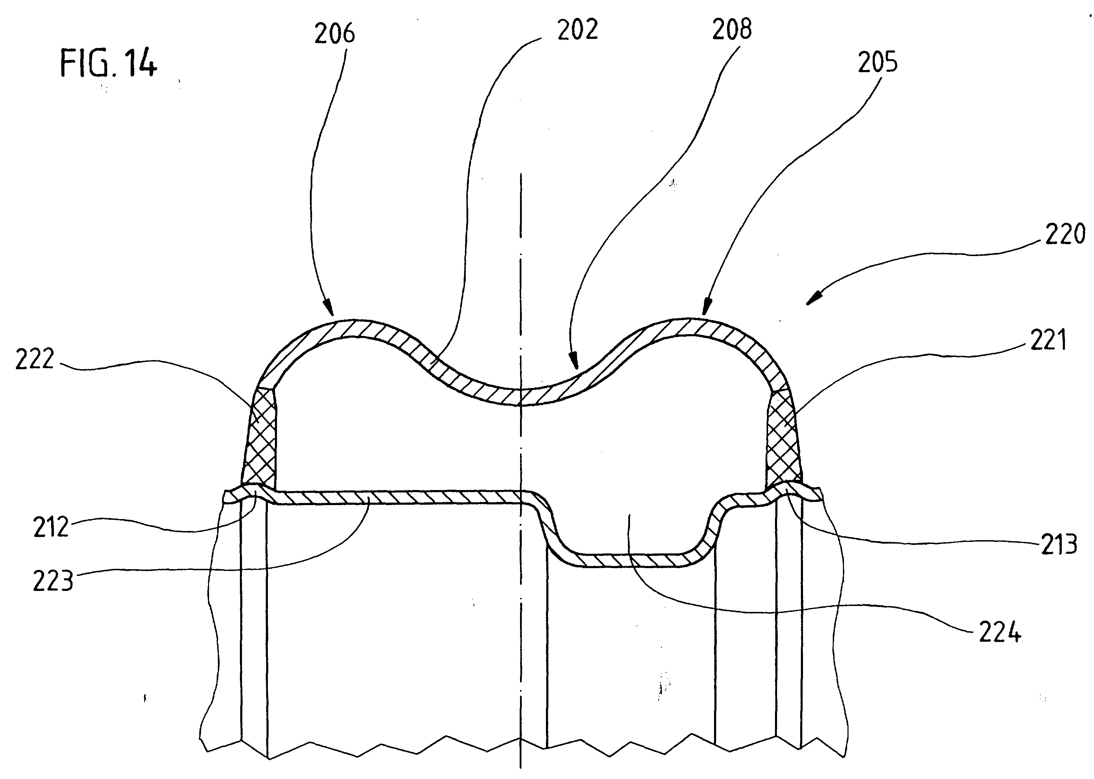

Die Figur 14 zeigt einen Notlaufstützkörper 220, dessen Stützelemente 221 und 222 in Verlängerung der axial äußeren Bereiche als Kreisringscheiben ausgebildet sind, die aus gummielastischem Material bestehen. Der schalenförmige Ringkörper 202 besteht hierbei aus einer Aluminiumlegierung.

Während die in den Figuren 212 und 213 gezeigten Ausführungen auf eine Felge 207 aufgebracht werden, die entweder zweiteilig oder lediglichvorgeformt und nach dem Aufbringen des Notlaufstützkörpers und des Reifens formgebend auf ihr Fertigmaß verarbeitet wird, lässt sich der Notlaufstützkörper 220 auf eine Standardfelge 223 mit einem Tiefbett 224 aufbringen.

Die Dicke der gummielastischen Stützkörper mit im Fußbereich etwa 8 mm überschreitet die Dicke des Aluminiummateriales des schalenförmigen Ringkörpers 202, welches lediglich in einer Stärke von 4 bis 6 mm ausgebildet ist. Die somit eingestellte höhere Wanddicke des gummielastischen Materiales erlaubt eine sichere Abstützung bei gleichzeitig noch ausreichendem Verformungsvermögen für das Aufbringen auf die Standardfelge 223.

Eine solche Ausbildung weist weiterhin den Vorteil auf, dass die an den Felgen 223 anliegende Fußfläche der Stützelemente 221 und 222 nicht exakt auf die Form der Sitzfläche auf der Felge - beispielsweise auf dort vorhandene Sicken 212 und 213 - angepasst werden muss, da sich das gummielastische Material durch Relaxation an solche Bereiche vollständig anformt.

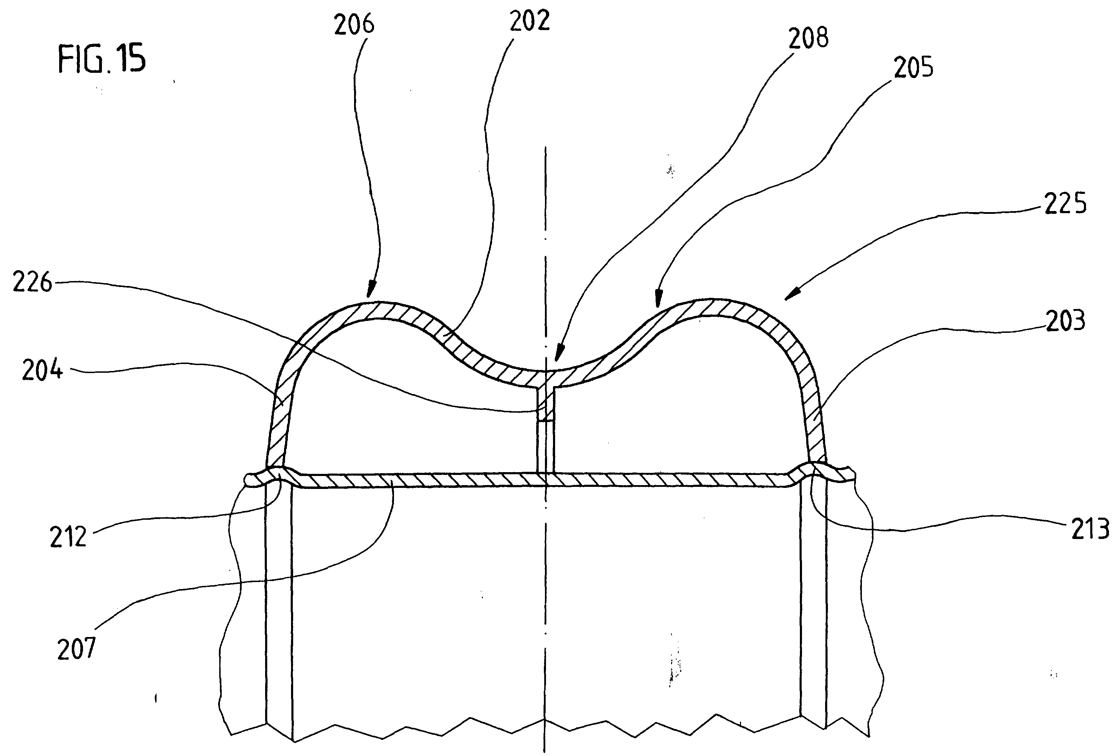

Die Figur 15 zeigt einen Notlaufstützkörper 225, der im wesentlichen aufgebaut ist wie der in der Fig. 12 dargestellte Notlaufstützkörper 201.

Auch hier besteht der Notlaufstützkörper 225 aus einem schalenförmigen Ringkörper 202, bei dem die Stützelemente 203 und 204 als Verlängerungen der axial äußeren Bereiche und als sich auf der Felge abstützende im wesentlichen ebene Kreisringscheiben ausgebildet sind.

Im Unterschied zu dem in der Fig. 12 dargestellten Notlaufstützkörper weist der hier gezeigte jedoch in seinem mittleren Bereich 208 eine umlaufende und zur Radmitte weisende Verstärkungsrippe 226 auf, die es erlaubt, den schalenförmigen Ringkörper für höhere Belastungen einzusetzen.

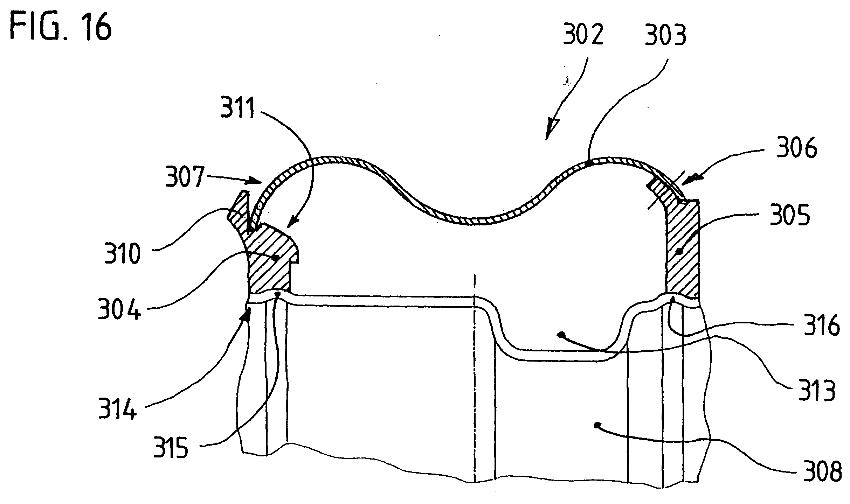

Die Figur 16 zeigt ein Fahrzeugrad 301, welches mit einem Notlaufstützkörper 302 versehen ist, der im Wesentlichen besteht aus dem schalenförmigen Ringkörper 303 innerhalb des Luftreifens und den Stützelementen 304 und 305 für die beiden axial äußeren Wandungsbereiche 306 und 307 des Ringkörpers 303. Ebenfalls erkennt man eine Tiefbettfelge 308 mit dem Felgenhorndurchmesser 309.

Der eine axial äußere Wandungsbereich 307 des schalenförmigen Ringkörpers 303 ist dabei mit dem zugehörigen ersten ringförmigen Stützelement 304 lösbar über eine Rastverbindung 310 verbunden.

Die Rastfunktion kann prinzipiell entweder im ringförmigen Stützelement oder im schalenförmigen Ringkörper oder, wie hier dargestellt, in beiden realisiert sein. Dabei besitzt der schalenförmige Ringkörper eine gewisse Federelastizität auch in seinen äußeren Wandungsbereichen. Das Stützelement 304 besteht ebenfalls aus einem elastischen, nämlich einem gummielastischen Material, und kann beim Aufschieben des Stützkörpers in die Rastnut an der Montageflanke 311 elastisch ausweichen.

Bei dem hier dargestelleten Ausführungsbeispiel beinhaltet die Montage zunächst, daß das Stützelement 304 als Ring auf seine beispielsweise durch eine Art Felgen-Hump 315 abgestützte Position aufgebracht wird. Während der Montage wird der schalenförmige Ringkörper 303, dessen anderer der axial äußeren Wandungsbereiche 306 bereits mit dem zweiten ringförmigen Stützelement 305 form- und/oder kraftschlüssig fest verbunden ist, auf die Felge aufgelegt. Der nächste Schritt besteht dann darin, dass der schalenförmige Ringkörper 303 in die Rastverbindung 10 eingedrückt wird und dort bereits axial und radial vollstandig in Form eines Festlagers fixiert ist. Die Verbindung des anderen der axial äußeren Wandungsbereiche 306 des schalenförmigen Ringkörpers 303 mit dem zweiten ringförmigen Stützelement kann hierbei durch Anvulkanisation oder auch durch Verbindungselemente erfolgen.

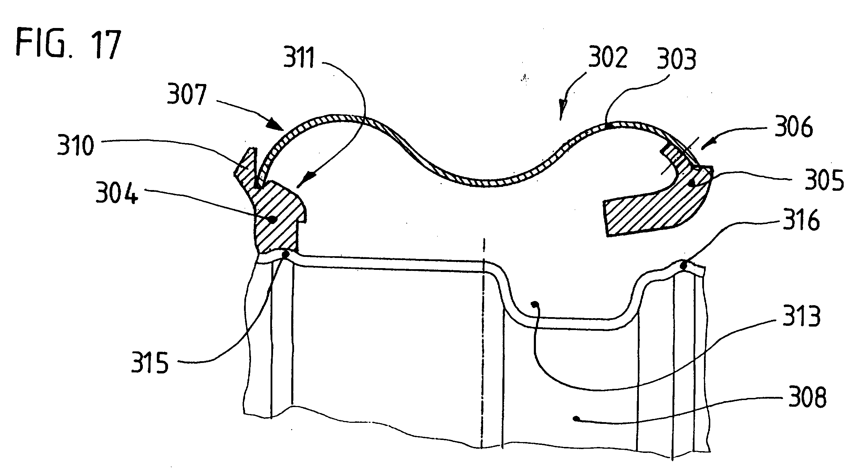

Das Stützelement 305 ist so ausgebildet, dass trotz der Grundfixierung durch den Hump 316 eine Loslagerfunktion und eine genügende Elastizität vorhanden ist, dass ein Einklappen bzw. ein elastisches Umbiegen zur Innenseite hin ohne weiteres möglich ist. Die Figur 17 zeigt hierzu den entsprechenden Zwischenschritt in der Montage, bei der das Stützelement 305 zum leichteren Aufschiebnbereits entgegen der rückstellenden Federkraft umgeklappt umgeklappt wird. Nach der richtigen Positionierung federt das Stützelement 305 in seine Ursprungslage und damit in die Betriebsposition zurück. Falls die Elastizität für das Rückfedern nicht ausrechend zu bemessen ist, können zwischen den ringförmigen Stützelementen ein oder mehrere über den Felgenumfang verteilte und die Stützelemente axial spreizende federelastische Elemente angeordnet werden.

Durch eine solche Ausbildung ist der Notlaufstützkörper als Festlager-Loslagersystem innerhalb der Reifenkavität fixiert, kann sämtliche im Notlauf auftretende Kräfte aufnehmen und lässt sich ohne weiteres bei Reifenwechsel wieder austauschen, indem die bereits beschriebenen Schritte in umgekehrter Reihenfolge ausgeführt werden.

Deutlich sichtbar wird bei dieser Ausführung auch, daß der Innendurchmesser der axial äußeren Wandungsbereiche 307 in etwa dem Felgenhornaußendurchmesser 309 entspricht. Selbstversändlich können die Felgenhornaußendurchmesser auch - wie bei allen anderen Ausführungsbeispielen auch - wie zu den Ausführungsbeispielen von Fig.6 beschrieben mit anderen Außendurchmessern ausgebildet werden.

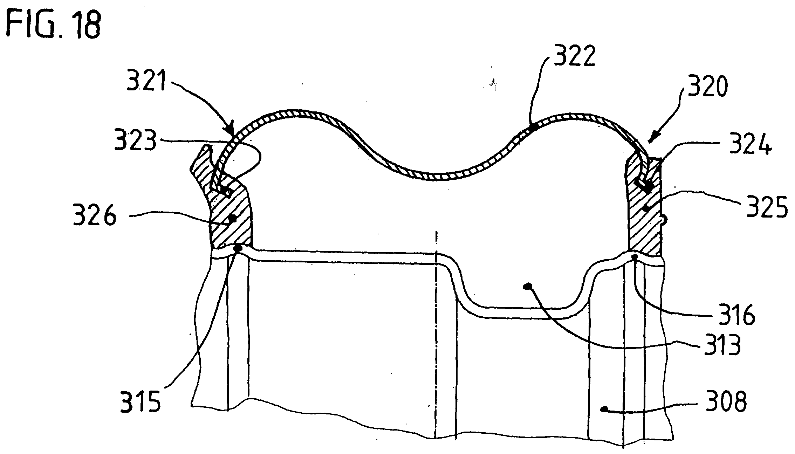

Die Fig. 18 zeigt ein weiteres erfindungsgemäßes Fahrzeugrad 318 mit einem geschlitzten Notlaufstützkörper 319 im Querschnitt, bei dem die axial äußeren Wandungsbereiche 320 und 321 des schalenförmigen Ringkörpers 322 an seinen Endbereichen 323 und 324 Verklammerungsprofile 325 und 326 aufweisen, wobei die zugehörigen Stützelemente 327 und 328 hierzu komplementär ausgebildet sind und eine dem Verklammerungsprofil 329 entsprechende Negativform aufweisen.

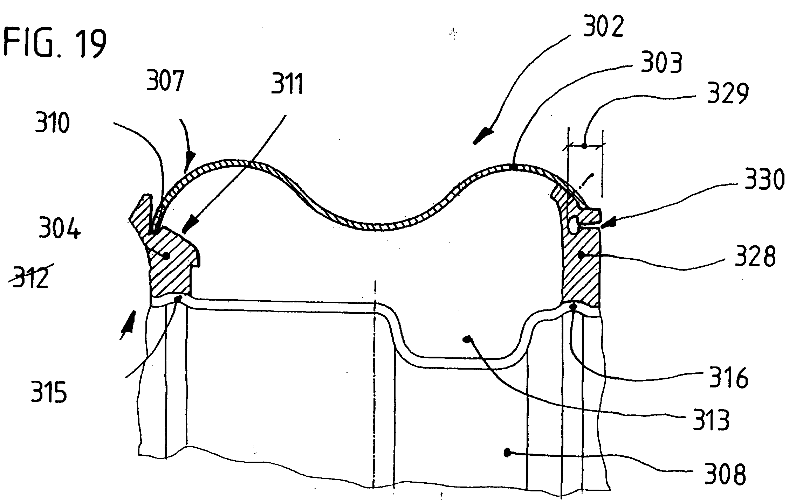

Die Fig. 19 zeigt ein erfindungsgemäßes Fahrzeugrad 330 mit einem Stützelement 331 und einem sich über eine Teilbreite des Stützelementes 331 erstreckenden Einschnitt 332, der ein besonders einfaches Verformen bzw. ein gelenkähnliches Umklappen des Stützelementes und damit eine weiter vereinfachte Montage erlaubt.

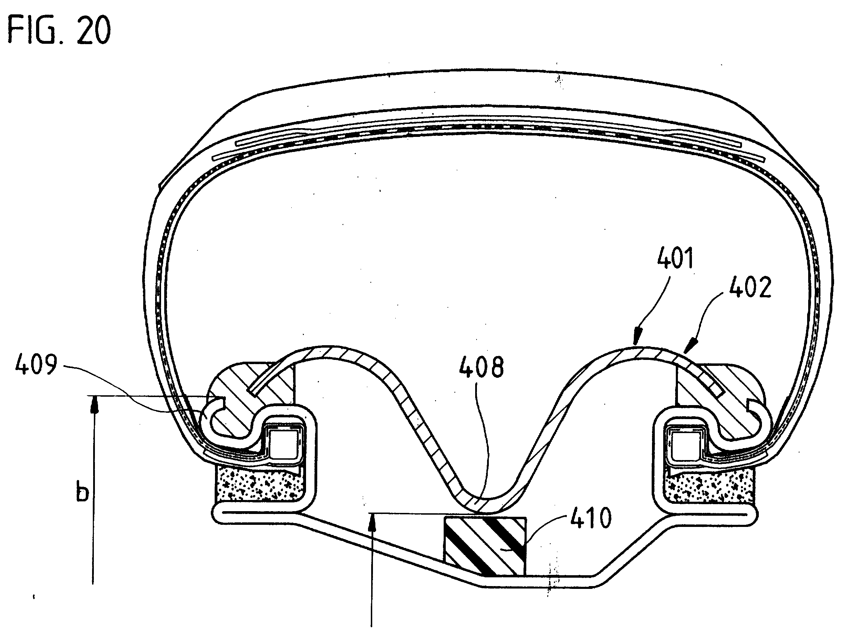

Fig. 20 zeigt ein erfindungsgemäßes Fahrzeugrad mit einem Notlaufstützkörper 401, dessen schalenförmiger Ringkörper 402 zur Erhöhung der Steifigkeit im Bereich mit zum Zenit des Reifens geöffneter Krümmung seinen minimalen Innendurchmesser b aufweist, der kleiner ist als der Außendurchmesser a der beiden Felgenhörner 409. Der schalenförmige Ringkörper ist wie zum Ausführungsbeispiel von Fig.8 beschrieben, zur besseren Montage mit einem Öffnungsschlitz versehen. Der schalenförmiger Ringkörper 402 kann so ausgebildet werden, daß er sich im Bereich mit zum Zenit des Reifens geöffneter Krümmung seinen minimalen Innendurchmesser b auf der Felge abstützt. Zur Erhöhung der Dämpfung kann auf die Felge zwischen den Abstützbereich auf der Felge und den schalenförmiger Ringkörper 402 im des minimalen Innendurchmesser b eine zusätzliche dämpfende Schicht - beispielsweise ein Gummistreifen oder ein dämpfender Kunststoffstreifen - angeordnet werden.

Bei allen genannten Ausführungsbeispiele ist der Wulstbereich und die Befestigung des Reifens an der Felge entsprechend den Darstellungen und Beschreibungen zu den Fig.1 bis 4 ausgeführt.

### Bezugszeichenliste

- 1: Felge
- 2: Felgenhorn
- 3: Fahrzeugluftreifen
- 4: Karkasse
- 5: Gürtel
- 6: Wulstbereich
- 7: Verdickung
- 8: Kern
- 9: Seitenwand
- 10: Ringkammer
- 11: Notlaufstützkörper
- 12: Füllring
- 13: Abriebfester Streifen
- 14: Notlauffläche
- 15: Lauffläche
- 16: unterer Seitenwandbereich
- 17: Festigkeitsträger
- 18: ringförmiges Stützelement
- 20: Ringkammerwand
- 21: Ringkammerwand
- 22: Ringkammerwand
- 23: Ringkammerwand
- 24: Ringöffnung
- 25: Innenseite des Felgenhorns
- 26: Stirnfläche des Felgenhorns
- 30: Lagerfläche
- 31: Notlaufstützkörper
- 32: Beschichtung
- 33: Festkörper
- 34: Bingham'sche Flüssigkeit
- 101: Fahrzeugrad
- 102: Notlaufstützkörper
- 103: schalenförmiger Ringkörper
- 104, 105: Stützelement
- 106, 107: axial äußerer Wandungsbereich des Ringkörpers
- 108: Tiefbettfelge
- 109 109': Felgenhorndurchmesser
- 110 - 113: Materialschicht
- 110' - 113': Materialschicht
- 114, 114': Felgenhump
- 115, 115': Reifenwulst
- 116: Tiefbett
- 117, 118': Felgenschulter
- 119: Öffnungsschlitz
- 120, 120': Trennfuge
- 121, 122: Profilpositiv
- 123, 124: Profilnegativ
- 125, 125': axial äußerer Wandungsbereich
- 126: schalenförmiger Ringkörper
- 127, 127': obere Materialschicht
- 128, 128': Stützelement
- 129, 129': Aufnahme
- 130, 130': untere Materialschicht
- 131, 131': Zwischenschicht
- 132, 132': Verbindungsbereich
- 133: Radialbelastung
- 134: Reifen
- 201: Notlaufstützkörper
- 202: schalenförmiger Ringkörper
- 203, 204: Stützelement
- 205, 206: axial äußerer Bereich
- 207: Felge
- 208: Bereich mit zum Zenit des Reifens geöffneten Krümmung
- 209: Reifen
- 212, 213: Sicke (Hump)
- 214: Notlaufstützkörper
- 215, 216: Stützelement
- 217: Sicke
- 218, 219: Kreisringscheibe
- 220: Notlaufstützkörper
- 221, 222: Stützelement
- 223: Felge
- 224: Tiefbett
- 225: Notlaufstützkörper
- 226: Verstärkungsrippe
- 301: Fahrzeugrad
- 302: Notlaufstützkörper
- 303: schalenförmiger Ringkörper
- 304, 305: Stützelement
- 306, 307: axial äußerer Wandungsbereich
- 308: Tiefbettfelge
- 309: Felgenhorndurchmesser
- 310: Rastverbindung
- 311: Montageflanke
- 313: Tiefbett
- 314: Felgenschulter
- 315, 316: Felgen-Hump
- 318: Fahrzeugrad
- 319: Notlaufstützkörper
- 320, 321: axial äußerer Wandungsbereich
- 322: schalenförmiger Ringkörper
- 323, 324: Verklammerungsprofil
- 325, 326: Stützelement
- 327: Fahrzeugrad
- 328: Stützelement
- 329: Teilbreite
- 330: über den Umfang verlaufender Einschnitt
- 401: Notlaufstützkörper
- 402: Schalenförmiger Ringkörper
- 408: gekrümmter Bereich
- 409: Felgenhorn
- 410: dämpfende Schicht

## Patentansprüche

1. Fahrzeugrad mit - insbesondere einteiliger - Felge und schlauchlosem Luftreifen, der einen Laufstreifen, eine Karkasse und zwei Seitenwände aufweist und der an den radial inneren Endbereichen der Seitenwände an der Felge befestigt ist,
- wobei innerhalb des Luftreifens ein sich auf der Felge abstützender Notfaufstützkörper angeordnet ist, der eine den Reifen im Schadensfall abstützende Notlauffläche aufweist und
- wobei an wenigstens einer Seitenwand des Luftreifens ein Wulst zur Befestigung des Luftreifens an der Felge ausgebildet ist, wobei wenigstens einer der beiden Wülste in seiner Umfangslänge - insbesondere elastisch - veränderbar ist.

2. Fahrzeugrad gemäß den Merkmalen von Anspruch 1,
wobei der Luftreifen mit seinen Wülsten radial innerhalb der äußeren Oberfläche der Felge - insbesondere in den axialen Stirnseiten der Felge - an der Felge befestigt ist.

3. Fahrzeugrad gemäß den Merkmalen von Anspruch 1,
- mit an jeder Seitenwand des Luftreifens zur Innenseite des Luftreifens hin verdickt ausgebildetem in seiner Umfangslänge - insbesondere elastisch - veränderbarem Wulst zur Befestigung des Luftreifens an der Felge,
- mit wenigstens in einer axialen Stirnseite der Felge einstückig ausgebildeter Ringkammer mit einer radial inneren,einer radial äußeren, einer axial zur Felgenmitte hin inneren und einer axial zur Felgenaußenseite hin äußeren Ringkammerwand, wobei die nach radial innen , nach radial außen und nach axial innen zur Felgenmitte hin ausgebildeten Ringkammerwände geschlossen und die nach axial außen zur Stirnseite der Felge hin ausgebildete Ringkammerwand im radial äußeren Bereich als ein radial nach innen gerichtetes Felgenhorn geschlossen ausgebildet und in ihrem radial inneren Bereich offen ausgebildet ist,
- wobei ein Füllring innerhalb der Ringkammer auf der radial inneren Ringkammerwand radial fest gelagert ist,
- wobei die Seitenwand des Reifens sich von axial außen durch die Öffnung in der axial außen ausgebildeten Ringkammerwand hindurch nach innen erstreckt und der Wulst in der Ringkammer auf der radialen Außenseite des Füllrings radial fest gelagert ist und in formschlüssigem Berührkontakt zur radial äußeren, zur axial inneren und zur axial äußeren geschlossenen Ringkammerwand ausgebildet ist, sodaß der Wulst nach radial außen, nach axial außen, nach axial innen und über den Füllring nach radial innen formschlüssig mit der einstückig ausgebildeten Ringkammer verbunden ist,
- wobei der Wulst insbesondere über seine ganze axiale Erstreckung nach radial innen vollständig auf dem Füllring aufliegt und wobei insbesondere der Wulst und der Füllring die Ringkammer vollständig ausfüllen.

4. Fahrzeugrad gemäß den Merkmalen von Anspruch 3,
wobei die axiale Position der in der radial äußeren Mantelfläche ausgebildeten Notlauffläche zumindest teilweise der axialen Position des in der Felge befestigten Wulstes entspricht.

5. Fahrzeugrad gemäß den Merkmalen von Anspruch 3 oder 4,
wobei auf den axialen Seitenbereichen der radial äußeren Mantelfläche der Felge jeweils eine Notlauffläche ausgebildet ist, die sich insbesondere axial soweit nach innen erstreckt, daß der Gürtel in seinen axialen Randzonen von jeder Schulter mit 10 bis 30 % überdeckt ist.

6. Fahrzeugrad gemäß den Merkmalen von Anspruch 3,4 oder 5,
wobei im Wulst ein Gummikern integriert ausgebildet ist,
wobei der Gummikern insbesondere mit einer Shore -A- Härte aus dem Bereich von 80 bis 100, bevorzugt aus dem Bereich zwischen 85 bis 90 ausgebildet ist.

7. Fahrzeugrad gemäß den Merkmalen von Anspruch 3, 4 oder 5,
wobei der Wulst kernlos ausgebildet ist.

8. Fahrzeugrad gemäß den Merkmalen von einem oder mehreren der vorangegangenen Ansprüche,
wobei der Füllring zum Lösen und/oder zum Befestigen des Wulstes axial bewegbar ausgebildet ist, wobei die Ringkammer an ihrer radial inneren Seite über ihre gesamte axiale Erstreckung als Lagerfläche zum axialen Aufschieben und zum axialen Abziehen des Füllrings ausgebildet ist und
wobei der Füllring an seiner radial inneren Seite als korrespondierende Lagerfläche ausgebildet ist.

9. Fahrzeugrad gemäß den Merkmalen von einem der vorangegangenen Ansprüche,
wobei der Füllring mit seiner radial äußeren Mantelfläche in seiner Erstreckung innerhalb der Ringkammer zylindrisch ausgebildet ist.

10. Fahrzeugrad gemäß den Merkmalen von einem der vorangegangenen Ansprüche,
bei dem der maximale Durchmesser der Notlaufstützflächen um einen Faktor zwischen 1,05 und 1,3 - insbesondere zwischen 1,1 und 1,2 - größer als der Innenringdurchmesser des Wulstkerns im montierten Zustand des Fahrzeugrades beträgt.

11. Fahrzeugrad gemäß den Merkmalen von einem der vorangegangenen Ansprüche,
wobei der Wulstkern eine Dehnbarkeit und/oder Stauchbarkeit von 5 bis 30 % -insbesondere 10 bis 20 % - aufweist.

12. Fahrzeugrad gemäß den Merkmalen von einem der vorangegangenen Ansprüche,
wobei der Wulstkern eine Dehnbarkeit von 5 bis 30 % -insbesondere 10 bis 20 % - und eine Stauchbarkeit von 1 bis 5% - insbesondere von 2,5 bis 3,5 % - aufweist und
wobei der Wulstkern insbesondere im montierten Zustand des Fahrzeugrades ungedehnt und ungestaucht ist.

13. Fahrzeugrad gemäß den Merkmalen von einem der vorangegangenen Ansprüche,
wobei der Luftreifen mit seinem Wulst an der Felge befestigt ist und im unteren Seitenwandbereich an der Felge anliegt.

14. Fahrzeugrad gemäß den Merkmalen von einem der vorangegangenen Ansprüche,
wobei der Füllring aus einem oder mehreren gummierten - insbesondere um die Achse des Füllrings wendelförmig gewickelten - Festigkeitsträger ausgebildet ist.
wobei jeder Festigkeitsträger textiler Art oder aus Stahl monofilamentartig oder multifilamentartig oder aus Gewebe ausgebildet ist.

15. Fahrzeugrad gemäß den Merkmalen von Anspruch 1,
bei dem innerhalb der Reifenkavität ein Gleitmittel zur Vermeidung der Reibung zwischen im Notlauf relativ zueinander bewegten Teilen eingebracht ist.

16. Fahrzeugrad gemäß den Merkmalen von Anspruch 15,
wobei das Gleitmittel als Suspension aus einer mit einem Anteil von Festkörpern versehenen Flüssigkeit besteht, wobei die Festkörper eine sphärische Oberfläche aufweisen und als Rollkörper zum Aufbau einer Rollreibung zwischen den relativ zueinander bewegten Teilen ausgebildet sind.

17. Fahrzeugrad gemäß den Merkmalen von Anspruch 1,
bei dem der Notlaufstützkörper als schalenförmiger Ringkörper innerhalb des Luftreifens ausgebildet ist, der eine den Reifen im Schadensfall abstützende Notlauffläche aufweist und sich mit seinen beiden axial äußeren Wandungsbereichen über ringförmige Stützelemente auf der Radfelge abstützt.

18. Fahrzeugrad gemäß den Merkmalen von Anspruch 17,
wobei mindestens eines der den Notlaufstützkörper bildenden und aus schalenförmigem Ringkörper und zwei ringförmigen Stützelementen bestehenden mindestens drei Teile als separates und erst bei der Montage des Reifens auf die Felge den Notlaufstützkörper komplettierendes Bauteil ausgebildet ist.

19. Fahrzeugrad nach Anspruch 17,
wobei mindestens eines der Stützelemente als seitliche Anlagefläche für die korrespondierende Seitenwand ausgebildet ist.

20. Fahrzeugrad nach Anspruch 18 oder 19,
wobei die lösbare Verbindung zwischen dem einen axial äußeren Wandungsbereich des schalenförmigen Ringkörpers und dem zugehörigen ersten ringförmigen Stützelement sowie dessen Abstützung auf der Felge als ein nach der Radmontage in axialer und radialer Richtung wirkendes Festlager für den Ringkörper ausgebildet sind.

21. Fahrzeugrad nach einem der Ansprüche 18 bis 20,
wobei das zweite ringförmige Stützelement unterhalb der form- und / oder kraftschlüssigen festen Verbindung mit den äußeren Wandungsbereichen des schalenförmigen Ringkörpers einen über den Umfang verlaufenden und sich quer zur Umfangsrichtung von der Reifenseite zur Reifenmitte hin über eine Teilbreite des Stützelementes erstreckenden Einschnitt aufweist.

22. Fahrzeugrad nach einem der Ansprüche 18 bis 21,
wobei der schalenförmige Ringkörper als nicht geschlossener Schlitzring ausgebildet ist.

23. Fahrzeugrad nach Anspruch 1,
bei dem der Notlaufstützkörper auf seiner Notlauffläche gummielastische Auflagen aufweist.

24. Fahrzeugrad nach Anspruch 17,
bei dem der Notlaufstützkörper als schalenförmiger Ringkörper innerhalb des Luftreifens ausgebildet ist, der eine den Reifen im Schadensfall abstützende Notlauffläche aufweist und sich mit seinen beiden axial äußeren Wandungsbereichen über ringförmige Stützelemente auf der Radfelge abstützt, wobei die Stützelemente in radialer und in axialer Belastungsrichtung unterschiedliche Elastizitäten aufweisen,
wobei die ringförmigen Stützelemente als Verbundkörper ausgebildet sind, die über die radiale Höhe der Stützkörper aus mehreren miteinander verbundenen Materialschichten unterschiedlicher Elastizität bestehen.

25. Fahrzeugrad nach Anspruch 24,
wobei der Notlaufstützkörper als umlaufender schalenförmiger Ringkörper ausgebildet ist, der aus mindestens zwei durch jeweils eine radiale Einschnürung voneinander getrennten nach radial außen gewölbten Bereichen besteht und der sich über seine beiden axial äußeren Wandungsbereiche abstützt.

26. Fahrzeugrad nach Anspruch 1,
wobei die Notlauffläche durch die radial äußere Oberfläche eines im Querschnitt schalenförmigen Ringkörpers gebildet wird, wobei der Ringkörper im Querschnitt in seinen axial äußeren Bereichen eine mit zur Felge geöffneten ersten Krümmungen versehene Kontur aufweist, und eine zwischen den zur Felge geöffneten Krümmungen gelegene und mit zum Zenitbereich des Reifens geöffneten zweiten Krümmung versehene Kontur aufweist, wobei die Krümmungen einen oder mehrere ineinander übergehende Krümmungsradien aufweisen und der schalenförmige Ringkörper über ein oder mehrere Stützelemente auf der Felge abgestützt ist.

27. Fahrzeugrad nach Anspruch 26,
wobei der Ringkörper im Bereich der zweiten Krümmung einen minimalen Durchmesser aufweist, der maximal der Größe des maximalen Außendurchmesser der Felge entspricht

28. Fahrzeugrad nach Anspruch 27,
wobei im axialen Bereich der zweiten Krümmung des Ringkörpers zwischen Felge und zweiter Krümmung des Ringkörpers eine Schicht mit elastischem, stoßdämpenden Material - insbesondere aus Gummi oder aus Polyurethan hoher Dichte - angeordnet ist.

29. Fahrzeugrad nach Anspruch 26 oder 27,
wobei die Stützelemente als Verlängerungen der axial äußeren Bereiche der zur Felge geöffneten ersten Krümmungen und als sich auf der Felge abstützende im wesentlichen ebene Kreisringscheiben ausgebildet sind.

30. Fahrzeugrad nach Anspruch 26 oder 27,
wobei die Stützelemente als ein oder mehrere zwischen schalenförmigem Ringkörper und Felge angeordnete Stützringe ausgebildet sind.

31. Fahrzeugrad nach Anspruch 26 bis 30,
wobei die Stützelemente aus gummielastischem oder elastoplastischem Material und der schalenförmige Ringkörper aus einem im Vergleich zum Material der Stützelemente härteren Kunststoff bestehen.

32. Fahrzeugrad nach Anspruch 31,
wobei der schalenförmige Ringkörper aus faserverstärktem Kunststoff besteht.

33. Fahrzeugrad nach Anspruch 30 bis 32,
wobei die Stützelemente aus gummielastischem oder elastoplastischem Material eine größere Wanddicke als der schalenförmige Ringkörper aufweisen.

34. Fahrzeugrad nach Anspruch 26 bis 30,
wobei der schalenförmige Ringkörper aus Aluminium und die Stützelemente aus Federstahl bestehen.

35. Fahrzeugrad nach Anspruch 30,
wobei die Stützelemente als ein zwischen schalenförmigem Ringkörper und Felge angeordneter und im wesentlichen der Breite des schalenförmigen Ringkörpers entsprechender Stützring ausgebildet sind.

36. Fahrzeugrad nach Anspruch 29 bis 35,
wobei die Stützelemente in den den Reifenseitenwänden benachbarten Bereichen auf der Felge abgestützt und als zusätzliche Anlagefläche ausgebildet sind.

37. Fahrzeugrad nach Anspruch 1,
wobei der Notlaufstützkörper als umlaufender schalenförmiger Ringkörper ausgebildet ist, der insbesondere aus mindestens zwei durch jeweils eine radiale Einschnürung voneinander getrennten nach radial außen gewölbten Bereichen besteht, und der sich über seine beiden axial äußeren Wandungsbereiche abstützt.

38. Fahrzeugrad nach einem oder mehreren der Ansprüchen 26 bis 37,
wobei der schalenförmige Ringkörper durch auf seiner zur Felge gerichteten Unterseite befindliche und in Umfangs- oder - Axialrichtung verlaufende Rippen verstärkt ist.

39. Verfahren zur Montage eines Fahrzeugrad mit - insbesondere einteiliger - Felge und schlauchlosem Luftreifen, der einen Laufstreifen, eine Karkasse und zwei Seitenwände aufweist und der an den radial inneren Endbereichen der Seitenwände an der Felge befestigt ist,
- bei dem zunächst ein Notlaufstützkörper, der eine den Reifen im Schadensfall abstützende Notlauffläche aufweist, auf der Felge angeordnet wird und
- bei dem danach ein Wulst des Reifens in seinem Umfang - insbesondere elastisch - soweit verändert wird, daß er dann von der einen Seite der Felge zur anderen Seite der Felge über die Felge mit dem darauf montierten Notlaufstützkörper bewegt werden kann,
- bei dem im Anschluß daran der Umfang des Wulstes wieder in den ersten Zustand verändert wird, und
- der Reifen mit seinen Wülsten dann an der Felge befestigt wird.

40. Verfahren zur Montage eines Fahrzeugrades gemäß den Merkmalen von Anspruch 39,
bei dem der Luftreifen auf der mit Notlaufstützkörper bestückter Felge mit beidseitig der Felge jeweils in die einstückig axiale Stirnseite der Felge ausgebildeter, nach radial innen, nach radial außen und nach axial innen zur Felgenmitte hin geschlossener und zur Stirnseite hin teilweise offen ausgebildeter Ringkammer zur Aufnahme des Wulstes und eines Füllrings radial innerhalb des Wulstes zur Befestigung des Luftreifens an der Felge durch axiales Einführen durch die Öffnung, wobei die Öffnung in der Stirnseite von radial außen durch das radial nach innen weisende, einstückig mit den Kammerwänden ausgebildete Felgenhorn in ihrem radial äußeren Bereich geschlossen ist,
- wobei der Reifen zunächst mit seinem Wulst in die zur Aufnahme des Wulstes ausgebildete Ringkammer eingeführt wird und
- wobei der Reifen dann mit einem axial auf der Felge beweglichen Füllring durch axiale Bewegung des Füllrings radial zwischen einer Lagerfläche in der Ringkammer der Felge und dem Wulst in axialen und radialen Formschluß nach radial außen und axial innen zu den Kammerwänden, nach axial außen zum Felgenhorn der Ringkammer und nach radial innen zum Füllring gebracht und somit in der Ringkammer befestigt wird.
